# EUROPÄISCHE PATENTANMELDUNG

(11) **EP 4 787 287 A1**
(43) Veröffentlichungstag der Anmeldung: **05.08.2026**
(21) Anmeldenummer: 25155288.1
(22) Anmeldetag: 31.01.2025
(51) Int. Cl.: G06T 3/06

(54) **COMPUTERIMPLEMENTIERTES VERFAHREN ZUM BEREITSTELLEN ZUMINDEST EINES ZWEIDIMENSIONALEN, ENTFALTETEN BILDDATENSATZES**

(71) Anmelder: Siemens Healthineers AG, 91301 Forchheim (DE)
(72) Erfinder: FRIEDMANN, Dominik, 91058 Erlangen (DE); LADES, Felix, 91052 Erlangen (DE); SÜHLING, Michael, 91052 Erlangen (DE); CHEKKOURY, Andrei, 91054 Erlangen (DE); EIBENBERGER, Eva, 90427 Nürnberg (DE)
(74) Vertreter: Siemens Healthineers Patent Attorneys

(57) **Zusammenfassung**

Die Erfindung betrifft ein computerimplementiertes Verfahren zum Bereitstellen zumindest eines entfalteten 2D-Bilddatensatzes einer anatomischen Struktur, insbesondere zumindest eines Teils der Hand, umfassen die Schritte
- Bereitstellen eines ersten 3D-Bilddatensatzes (BDS1), der die anatomische Struktur umfasst,
- Bestimmen (S2) einer Menge von charakteristischen Strukturpunkten (SP) der anatomischen Struktur basierend auf dem ersten 3D-Bilddatensatz (BDS1),
- Bereitstellen (S3) einer zweidimensionalen Musterdarstellung der anatomischen Struktur,
- Bestimmen (S4) einer Menge von charakteristischen Musterpunkten (MP) durch Abbilden der Menge von Strukturpunkten (SP) auf die Musterdarstellung,
- Bestimmen (S5) einer Deformationsfläche in einer Ebene mit der Menge von Musterpunkten (MP), wobei jeder Musterpunkt der Menge von Musterpunkten (MP) durch einen Flächenpunkt in der Deformationsfläche repräsentiert ist,
- Berechnen (S6) einer ersten, deformierten Deformationsfläche durch Anwenden eines Deformationsalgorithmus auf die Deformationsfläche, die Menge von Strukturpunkten (SP) und die Menge von Flächenpunkten, wobei jeder Flächenpunkt aus der Menge von Flächenpunkten zu dem entsprechenden Strukturpunkt (SP) aus der Menge von Strukturpunkten (SP) bewegt wird,
- Berechnen (S7) einer Menge von Voxelpositionen in Bezug auf den ersten 3D-Bilddatensatz (BDS1) oder in Bezug auf einen bereitgestellten, zweiten 3D-Bilddatensatz und basierend auf der ersten, deformierten Deformationsfläche,
- Berechnen (S8) des entfalteten 2D-Bilddatensatzes (EBDS1) der anatomischen Struktur basierend auf dem ersten 3D-Bilddatensatz (BDS1) oder dem zweiten 3D-Bilddatensatz und der Menge von Voxelpositionen, und
- Bereitstellen (S9) des entfalteten 2D-Bilddatensatzes (EBDS1).

## Beschreibung

Die Erfindung betrifft ein computerimplementiertes Verfahren zum Bereitstellen zumindest eines zweidimensionalen, entfalteten Bilddatensatzes, insbesondere zumindest eines Teils der Hand, basierend auf einem dreidimensionalen Bilddatensatz. Weiterhin betrifft die Erfindung ein korrespondierendes Datenverarbeitungssystem, ein System umfassend ein medizinisches Bildgebungssystem und ein solches Datenverarbeitungssystem, sowie ein Computerprogrammprodukt und ein computerlesbares Speichermedium.

Unabhängig vom grammatikalischen Geschlecht eines bestimmten Begriffes sind im Folgenden Personen mit männlicher, weiblicher oder anderer Geschlechteridentität mit umfasst.

Nicht nur aber insbesondere im Falle komplexer Unfälle ist es entscheidend, einen schnellen Überblick über die gesamten Auswirkungen auf den Körper eines Patienten zu erhalten, z.B. um herauszufinden, ob und wo ein Patient Frakturen oder Verrenkungen in den Knochen oder kleinere Gefäßverletzungen hat. In solchen Fällen werden oft dreidimensionale Bilder, beispielsweise mittels eines Computertomographie (CT)-Scans, angefertigt. Bei gekrümmten anatomischen Strukturen oder solchen, welche in den Bilddatensätzen eines solchen Scans beliebige Positionen und Haltungen einnehmen können, wie beispielsweise die Hände, ist es oft schwierig, das gesamte Ausmaß von Beeinträchtigungen mit herkömmlichen Methoden zu beurteilen. Das Blättern, beispielsweise, durch die axialen Schnitte eines dreidimensionalen Bilddatensatzes ist sehr zeitaufwändig, und meist erstrecken sich Knochenbrüche oder Gefäßverletzungen über mehr als ein Schnittbild, was verhindert, dass das gesamte dreidimensionale Ausmaß der Fraktur oder Verletzung einfach und in einer Ansicht sichtbar wird. Im Gegensatz dazu visualisieren beispielsweise dreidimensionale Übersichtsaufnahmen wie Volumenrendering-Techniken (VRT) insbesondere die Oberfläche von Strukturen und nur aus einer bestimmten Perspektive. Die Verwendung dieser Methoden kann folglich mühsam und/oder anfällig dafür sein, Frakturen oder Gefäßverletzungen zu übersehen. Dies kann nicht nur zu negativen Ergebnissen für den Patienten führen, sondern auch finanzielle und rechtliche Konsequenzen haben.

Eine Möglichkeit für eine verbesserte Visualisierung solcher anatomischen Strukturen kann das Erzeugen eines entfalteten Bilddatensatzes sein, welcher die anatomische Struktur basierend auf dem dreidimensionalen Bilddatensatz in eine zweidimensionale Darstellung überführt. Beispielsweise offenbart die EP 3828836 B1 ein Verfahren zur Entfaltung einer röhrenförmiger Struktur, beispielweise ein Blutgefäß. In der DE102011085860B4 wird ein Verfahren zur medizinischen Bildgebung eines Körperteils, insbesondere der Hand, offenbart, wobei der Bildinhalt einer gekrümmten Fläche auf eine Betrachtungsebene abgebildet wird.

Die Aufgabe der vorliegenden Erfindung besteht darin, eine verbesserte Methode umfassend die Bereitstellung eines entfalteten, zweidimensionalen Bilddatensatzes einer anatomischen Struktur anzugeben.

Die Aufgabe wird erfindungsgemäß gelöst durch den Gegenstand der unabhängigen Ansprüche. Vorteilhafte Ausführungsformen mit zweckmäßigen Weiterbildungen sind Gegenstand der Unteransprüche.

Die Erfindung betrifft ein computerimplementiertes Verfahren zum Bereitstellen zumindest eines zweidimensionalen, entfalteten Bilddatensatzes (entfalteter 2D-Bilddatensatz) einer anatomischen Struktur, insbesondere zumindest eines Teilbereichs der Hand. In einem ersten Schritt wird ein erster dreidimensionaler Bilddatensatzes (3D-Bilddatensatz), der die anatomische Struktur umfasst, bereitgestellt. In einem weiteren Schritt wird eine Menge von charakteristischen Strukturpunkten der anatomischen Struktur basierend auf dem ersten 3D-Bilddatensatz bestimmt. In einem weiteren Schritt wird eine zweidimensionale Musterdarstellung der anatomischen Struktur bereitgestellt. In einem weiteren Schritt wird eine Menge von charakteristischen Musterpunkten durch Abbilden der Menge von Strukturpunkten auf die Musterdarstellung bestimmt. In einem weiteren Schritt wird eine Deformationsfläche in einer Ebene mit der Menge von Musterpunkten bestimmt, wobei jeder Musterpunkt der Menge von Musterpunkten durch einen Flächenpunkt in der Deformationsfläche repräsentiert ist. In einem weiteren Schritt wird eine erste deformierte Deformationsfläche durch Anwenden eines Deformationsalgorithmus auf die Deformationsfläche, die Menge von charakteristischen Strukturpunkten und die Menge von Flächenpunkten bestimmt, wobei jeder Flächenpunkt aus der Menge von Flächenpunkten zu dem entsprechenden charakteristischen Strukturpunkt aus der Menge von charakteristischen Strukturpunkten bewegt wird. In einem weiteren Schritt wird eine Menge von Voxelpositionen in Bezug auf den ersten 3D-Bilddatensatz oder in Bezug auf einen bereitgestellten, zweiten 3D-Bilddatensatz und basierend auf der ersten deformierten Deformationsfläche berechnet. In einem weiteren Schritt wird der entfaltete 2D-Bilddatensatz der anatomischen Struktur basierend auf dem ersten 3D-Bilddatensatz oder dem zweiten 3D-Bilddatensatz und der Menge von Voxelpositionen berechnet. In einem weiteren Schritt wird der entfaltete 2D-Bilddatensatz bereitgestellt.

Dabei können die vorstehend beschriebenen Schritte des vorgeschlagenen Verfahrens nacheinander und/oder zumindest teilweise gleichzeitig ausgeführt werden. Ferner können die Schritte des vorgeschlagenen Verfahrens zumindest teilweise, insbesondere vollständig, computerimplementiert sein.

Die anatomische Struktur kann eine anatomische Struktur eines menschlichen und/oder tierischen Patienten sein. Sie kann jedoch auch von einem Untersuchungsphantom umfasst sein. Insbesondere kann die anatomische Struktur solche Strukturen umfassen, deren Varianz in ihrer Ausbildung innerhalb der erwarteten Patientenpopulation einen musterbasierter Ansatz ermöglicht, d.h. deren Ausbildung innerhalb der erwarteten Patientenpopulation eine ausreichende Übereinstimmung zeigt. Die anatomische Struktur kann beispielsweise einen Teilbereich der Hand, des Armes oder des Fußes umfassen. Sie kann beispielsweise einen Teil der Skelettstruktur eines Patienten umfassen. Sie kann auch andere anatomische Strukturen umfassen. Die anatomische Struktur kann mehrere Teilstrukturen, auch Untereinheiten genannt, umfassen. Betrifft das Verfahren zum Beispiel eine Hand so können die Teilstrukturen jeweils die Finger bzw. zumindest alle zu einem Finger gehörigen Fingerknochen umfassen. Besonders vorteilhaft kann das Verfahren beispielsweise im Bereich der Hände eingesetzt werden, da dort die Anatomie zwischen Patienten ausreichend große Übereinstimmungen aufweist, die Lage und Haltung in 3D-Bilddatensätzen jedoch besonders stark variieren kann. Ein Bilddatensatz, welcher die anatomische Struktur in einer entfalteten Darstellung abbildet, kann hier eine vorteilhaft verbesserte Darstellung und Diagnose ermöglichen.

Das Bereitstellen eines ersten oder auch bereitgestellten zweiten 3D-Bilddatensatzes kann insbesondere ein Erfassen und/oder Auslesen eines computerlesbaren Datenspeichers und/oder ein Empfangen aus einer Datenspeichereinheit, beispielsweise einer Datenbank, umfassen. Ferner kann der Bilddatensatz von einer Verarbeitungseinheit eines medizinischen Bildgebungsgeräts zur Aufnahme des 3D-Bilddatensatzes bereitgestellt werden. Das medizinische Bildgebungsgerät kann beispielsweise eine Computertomographieanlage (CT) und/oder eine Magnetresonanztomographieanlage (MRT) und/oder ein medizinisches Röntgengerät, insbesondere ein medizinisches C-Bogen-Röntgengerät, und/oder ein Ultraschallgerät und/oder eine Positronenemissionstomographieanlage (PET) umfassen. Das Bereitstellen eines 3D- Bilddatensatzes kann auch ein Erzeugen, insbesondere ein Rekonstruieren, des 3D-Bilddatensatzes basierend auf vorerfassten Messdaten umfassen.

Ein 3D-Bilddatensatz erlaubt eine dreidimensionale, insbesondere räumlich dreidimensionale, Darstellung eines Abbildungsbereichs. Im vorgeschlagenen Verfahren umfasst der Abbildungsbereich zumindest die anatomische Struktur. Ein 3D Bilddatensatz kann auch als eine Mehrzahl an Schichtbilddatensätzen, sogenannten Querschnittsdarstellungen, dargestellt werden. Ein Schichtbilddatensatz umfasst jeweils eine Schicht des 3D-Bilddatensatz an einer Position entlang einer ausgezeichneten Achse. Ein Schichtbilddatensatz erlaubt jeweils eine zweidimensionale, insbesondere räumlich zweidimensionale, Darstellung der jeweiligen Schicht des 3D-Bilddatensatzes.

Vorteilhafterweise umfasst ein solcher 3D-Bilddatensatz mehrere Voxel, insbesondere Bildpunkte. Dabei kann jedes Voxel vorzugsweise jeweils einen Bildwert, im Folgenden auch Voxelwert, insbesondere einen CT-Bildwert in HU ("Hounsfield Units") im Falle eines CT-Scans oder einen dazu analogen Intensitätswert, aufweisen. Üblicherweise sind die Voxelzentren in einem regelmäßigen dreidimensionalen Gitter angeordnet. Analog dazu kann ein Schichtbilddatensatz mehrere Pixel, insbesondere Bildpunkte, umfassen. Dabei kann jeder Pixel vorzugsweise jeweils einen Bildwert, insbesondere einen CT-Bildwert in HU ("Hounsfield Units") im Falle eines CT-Scans oder eine dazu analogen Intensitätswert, aufweisen.

Der entfalteter 2D-Bilddatensatz weist insbesondere mehrere Pixel, insbesondere Bildpunkte, wobei jeder Pixel vorzugsweise jeweils einen Bildwert, insbesondere einen CT-Bildwert in HU ("Hounsfield Units") im Falle eines CT-Scans oder eine dazu analogen Intensitätswert, aufweisen. Im vorgeschlagenen Verfahren basieren die Bildwerte des entfalteten 2D-Bilddatensatzes auf der Menge an zuvor berechneten Voxelpositionen des ersten oder zweiten 3D-Bilddatensatzes und den Bildwerten des entsprechenden 3D-Bilddatensatzes.

Die Menge der charakteristischen Strukturpunkte im ersten 3D-Bilddatensatz kann beispielsweise (halb-)automatisch und/oder basierend auf einer entsprechenden manuellen Benutzereingabe ausgewählt werden. Die Menge an charakteristischen Strukturpunkten kann einen oder eine Mehrzahl an diskreten Punkten und/oder mehrere Punkte umfassen, welche eine eindimensionale Line, welche in drei Dimensionen gekrümmt sein kann umfassen. Sie können auch eine zweidimensionale Fläche oder Mannigfaltigkeit ausbilden, welche eben oder in drei Dimensionen gekrümmt sein kann. Der entfaltete 2D-Bilddatensatz ermöglicht die bestimmten charakteristischen Strukturpunkte, welche im 3D-Bilddatensatz ggf. auf einer gekrümmten Line oder Fläche angeordnet sind, in einer einzigen zweidimensionalen Abbildung darzustellen. Die charakteristischen Strukturpunkte können folglich die interessierende Bildebene für den entfalteten 2D-Bilddatensatz aufspannen. Insbesondere kann die Menge an charakteristischen Strukturpunkten den dreidimensionalen Verlauf und/oder Lage der anatomischen Struktur im 3D-Bilddatensatz, insbesondere auch in einer reduzierten Form, abbilden.

Insbesondere kann die Menge der charakteristischen Strukturpunkte im ersten 3D-Bilddatensatz auf dem Anwenden eines Segmentierungsalgorithmus und/oder Kantendetektion und/oder eines Mittellinienextraktionsalgorithmus auf den ersten 3D-Bilddatensatz hinsichtlich der anatomischen Struktur basieren. Umfasst die anatomische Struktur beispielsweise zumindest einen Teilbereich der Hand, so kann die Menge der charakteristischen Strukturpunkte zum Beispiel für zumindest einen oder auch mehrere oder alle Finger, insbesondere dessen bzw. deren zugehörigen Fingerknochen, mindestens einen charakteristischen Strukturpunkt, vorteilhafterweise jedoch eine Vielzahl von charakteristischen Strukturpunkten, umfassen, der die Lage und/oder den Verlauf des Fingers bzw. der Finger im 3D-Bilddatensatz abbildet. Beispielsweise kann der mindestens eine, vorteilhaft jedoch die Vielzahl an charakteristischen Strukturpunkten sich auf einer Mittellinie, auch Mittelachse genannt, dieses Fingers bzw. den Mittellinien der jeweiligen Finger, insbesondere der zu dem Finger gehörigen Fingerknochen, befinden. Gleiches kann auch auf einen abgebildeten Fuß oder Arm oder andere anatomische Strukturen übertragen werden. Daneben kann es auch andere Ausbildungen geben.

Vom Bestimmen der Menge an charakteristischen Strukturpunkten kann auch umfasst sein, zusätzliche Informationen zu den charakteristischen Strukturpunkten zu bestimmen, beispielsweise Annotationsinformationen, wie etwa die Zugehörigkeit der charakteristischen Strukturpunkte zu anatomischen Teilstrukturen, oder anatomische Landmarken. Umfasst die anatomische Struktur beispielsweise einen Teilbereich des Skeletts, so können die charakteristischen Strukturpunkte jeweils als einem bestimmten Skelettteil zugeordnet bestimmt sein. Die Strukturpunkte können "gelabelt" sein.

Das Bereitstellen einer 2D-Musterdarstellung, auch Vorlage oder "template" genannt, der anatomischen Struktur kann insbesondere ein Erfassen und/oder Auslesen eines computerlesbaren Datenspeichers und/oder ein Empfangen aus einer Datenspeichereinheit, beispielsweise einer Datenbank, umfassen. Die Musterdarstellung kann insbesondere eine durchschnittliche Anatomie der anatomischen Struktur in einer durchschnittlich von dem Verfahren betroffenen bzw. einer erwartbaren Patientenpopulation abbilden. Sie kann damit eine standardisierte Darstellung der anatomischen Struktur umfassen. Beispielsweise kann die Musterdarstellung erstellt worden sein, indem anatomische Strukturen von einer großen Stichprobe von Probanden gemittelt wurden. Insbesondere kann die Musterdarstellung auf die zu bestimmende Menge an charakteristischen Strukturpunkten abgestimmt sein. Die Musterdarstellung kann die durch die bestimmten charakteristischen Strukturpunkten aufgespannte Bildebene durch die anatomische Struktur in einer standardisierten Form repräsentieren. Die Musterdarstellung kann insbesondere einer zweidimensionalen Darstellung der Anatomie der anatomischen Struktur entsprechen, insbesondere bei einer Anordnung der anatomischen Struktur entlang einer Ebene. Betrifft das Verfahren beispielsweise die Hand oder zumindest einen Teilbereich der Hand, so kann die 2D-Musterdarstellung die Anatomie einer Hand, insbesondere die Anordnung der Handknochen, in einer standardisierten Form abbilden. Die Musterdarstellung kann die Anatomie der anatomischen Struktur auch in einer reduzierten Form abbilden. Umfassen die charakteristischen Strukturpunkte beispielsweise eine Mittelachse der anatomischen Struktur, so kann die Musterdarstellung ebenfalls eine bereitgestellte Mustermittelachse einer anatomischen Musterstruktur umfassen. Es können auch mehrere Musterdarstellungen bereitstellbar sein. Beispielsweise kann die Patientenpopulation in Kategorien basierend auf Patienteninformationen eingeteilt sein, etwa hinsichtlich eines Alters oder eines Geschlechts. Beispielsweise könnte dann eine entsprechende Musterdarstellung manuell oder automatisch basierend auf verfügbaren Patientendaten für den vorliegenden Fall auswählbar sein. Insbesondere kann die Musterdarstellung über ein reine Abbildung der Anatomie weitere Daten umfassen, beispielsweise Annotationsinformationen wie etwa Kennzeichnungen anatomischer Teilstrukturen oder anatomische Landmarken.

Beim Bestimmen der Menge von charakteristischen Musterpunkten kann insbesondere jeweils ein Gegenstück zu einem charakteristischen Strukturpunkt an einer gleichen relativen Position innerhalb der anatomischen Struktur in der Musterdarstellung bestimmt werden. Jeder Musterpunkt der Menge an Musterpunkten kann einem charakteristischen Strukturpunkt der Menge an Strukturpunkten zuordenbar sein. Die Anzahl der Menge an Musterpunkten und die Anzahl der Menge an charakteristischen Strukturpunkten kann sich 1:1 entsprechen, d.h. jedem Strukturpunkt kann ein Musterpunkt in einem 1:1 Verhältnis zugeordnet sein.

Die Deformationsfläche kann insbesondere eine glatte Geometrie aufweisen und/oder ein (Oberflächen-)Gitter, insbesondere ein regelmäßiges Gitter, umfassen. Das Gitter kann beispielsweise eine zweidimensionale Anordnung von Knoten umfassen, insbesondere m x n Knoten, wobei m und n ganze Zahlen sind. Die Deformationsfläche kann sich mindestens über die gesamte anatomische Struktur und/oder die Anordnung der bestimmten Menge von Musterpunkten erstrecken. Sie kann sich über den gesamten Bildbereich des ersten 3D-Bilddatensatzes oder der Musterdarstellung erstrecken. Insbesondere kann die Deformationsfläche an der Musterdarstellung ausgerichtet sein.

Die Deformationsfläche ist insbesondere derart vorgesehen, dass die Menge an Musterpunkten in der Ebene der Deformationsfläche angeordnet ist, wobei jeder Musterpunkt durch einen Flächenpunkt in der Deformationsfläche repräsentiert ist. Die Musterpunkte der Menge an Musterpunkten in der Deformationsfläche und die Flächenpunkte der Menge an Flächenpunkten können identisch sein. Ein Flächenpunkt kann folglich direkt durch einen Musterpunkt in der Deformationsfläche gegeben sein. Ist die Deformationsfläche beispielsweise als Gitter vorgesehen, so kann ein Flächenpunkt jeweils dem einem Musterpunkt nächstliegende Gitterknoten des Gitters entsprechen. Die Menge an Flächenpunkten kann folglich einer Menge an Gitterknotenpunkten entsprechen, welche jeweils den Musterpunkten der Menge an Musterpunkten in der Deformationsfläche am nächsten sind. Es kann auch andere Ausführungen geben.

Das Anwenden des Deformationsalgorithmus auf die initial glatte Deformationsfläche hat als Ergebnis eine deformierte, in der Regel in allen drei Dimensionen gekrümmte, Deformationsfläche, von welcher die charakteristischen Strukturpunkte umfasst sind. Der Deformationsalgorithmus kann beispielsweise auf einem sogenannten "As-Rigid-As-Possible"-Algorithmus (dt.: "So-starr-wie-möglich"-Algorithmus) basieren. Beispiele dafür sind in Sorkine, O., et al (As-Rigid-As-Possible Surface Modeling. EUROGRAPHICS/ACM SIGGRAPH Symposium on Geometry Processing (2007),109-116) beschrieben. Insbesondere kann der Laplace-Operator des Gitters während der Deformation erhalten bleiben, was zu einer Erhaltung der Kantenlängen und Winkel zwischen den Kanten des Gitters führt. Der Deformationsalgorithmus kann beispielsweise eine nichtlineare und/oder iterative Optimierung umfassen. Vorteilhaft kann eine glatte Deformation des planaren Gitters gewährleistet werden. Dabei dienen die Strukturpunkte bzw. Flächenpunkte als sogenannte Einschränkungspunkte ("constraint points") für die Deformation der initialen, undeformierten Deformationsfläche mittels des Deformationsalgorithmus, um eine deformierte Deformationsfläche zu erhalten, die die charakteristischen Strukturpunkte umfasst.

Nach der Deformation können die Voxelpositionen, insbesondere Voxelpositionen, die den Pixeln des entfalteten 2D-Bilddatensatzes entsprechen, bestimmt werden. Die Teilmenge der Vielzahl von Voxeln, welche den Pixeln des entfalteten 2D-Bilddatensatz entsprechen, kann beispielsweise durch Bestimmen einer Schnittmenge der zweidimensionalen deformierten Deformationsfläche im dreidimensionalen Raum mit der Vielzahl von Voxeln der dreidimensionalen Darstellung des ersten oder eines bereitgestellten, zweiten 3D-Bilddatensatzes bestimmt werden. Die Teilmenge der Vielzahl von Voxeln kann aus allen Voxeln der Vielzahl von Voxeln bestehen, die von der zweidimensionalen, deformierten Deformationsfläche berührt oder geschnitten werden, oder in einer vordefinierten Nachbarschaft der genannten berührten oder geschnittenen Voxel liegen. Es kann jedoch auch andere Übertragungsmethoden geben. Das zweidimensionale entfaltete Bild, insbesondere die Bildwerte der Pixel des entfalteten 2D-Bilddatensatzes, kann bzw. können dann durch Extrahieren von Voxelwerten aus den Voxelpositionen im ersten oder zweiten 3D-Bilddatensatz abgetastet, d.h. berechnet, werden. Dadurch kann eine bidirektionale Zuordnung zwischen 3D-Positionen im ersten oder zweiten 3D-Bilddatensatz und 2D-Positionen im entfalteten 2D-Bilddatensatz hergestellt werden. Das Bestimmen der Voxelpositionen bzw. der daraus extrahierten Bildwerte kann eine Interpolation umfassen, da eine deformierte Deformationsfläche nicht notwendigerweise durch die Voxelzentren eines 3D-Bilddatensatzes verläuft, die üblicherweise in einem festen Raster angeordnet sind.

Ein bereitgestellter zweiter 3D-Bildatensatz kann dabei ein Bilddatensatz sein, welcher auf Messdaten aus dem gleichen Aufnahmevorgang wie der erste 3D-Bilddatensatz basiert und damit Lage und Position der anatomischen Struktur im zweiten 3D-Bilddatensatz unverändert relativ zum ersten 3D-Bilddatensatz vorliegt. Der zweite 3D-Bilddatensatz kann den gleichen Abbildungsbereich darstellen wie der erste 3D-Bilddatensatz. Der zweite 3D-Bilddatensatz kann sich jedoch vom ersten 3D-Bilddatensatz beispielsweise hinsichtlich einer rekonstruierten Bildauflösung oder einem Informationsgehalt, beispielsweise betreffend spektrale Bildinformationen, unterscheiden. Unterscheidet sich der zweite 3D-Bilddatensatz vom ersten 3D-Bilddatensatz hinsichtlich einer Bildauflösung, kann für eine Berechnen der Voxelpositionen und des entfalteten Bilddatensatzes beispielsweise vorgesehen sein, dass eine Kantenlängen der Polygone eines die Deformationsfläche repräsentierenden planaren Oberflächengitters und/oder eine Anzahl der pro Polygon abgetasteten Punkte anpasst wird um die die Auflösung des resultierenden entfalteten 2D-Bilddatensatzes an die Auflösung des zweiten 3D-Bilddatensatzes anzupassen. Vorteilhaft kann für eine Entfaltung des zweiten 3D-Bilddatensatzes auf ein erneutes Anwenden des Deformationsalgorithmus verzichtet werden und somit recheneffizient und zeiteffizient ein entfalteter Bilddatensatz bestimmt werden.

Das Bereitstellen insbesondere des entfalteten 2D-Bilddatensatzes kann beispielsweise umfassen die Daten auf eine computerlesbares Speichereinheit zu schreiben oder sie auf einer Anzeigeneinheit, beispielsweise auf einem Monitor, darzustellen. Es kann auch umfassen, die Daten mittels einer geeigneten Schnittstelle für eine nachgeordnete Verarbeitungseinheit bereitzustellen, welche für eine Weiterverarbeitung des entfalteten 2D-Bilddatensatzes ausgebildet ist.

Die Bereitstellung des entfalteten 2D-Bilddatensatz ermöglicht eine zweidimensionale Darstellung von komplex angeordneten und geformten anatomischen Strukturen aus dem 3D-Bilddatensatz zu erhalten, welche eine detaillierte Untersuchung der anatomischen Struktur und der räumlichen Beziehungen einzelner Teilstrukturen zueinander in einer einzigen Ansicht ermöglicht. Diese Darstellung kann insbesondere bei geeigneter Wahl der charakteristischen Strukturpunkten eine zweidimensionale Abbildung der anatomischen Struktur repräsentieren, wenn die anatomische Struktur bei der Datenakquisition entlang einer Ebene angeordnet gewesen wäre. Der musterbasierte Ansatz ermöglicht dabei eine besonders effiziente, robuste und einfache Umsetzung des Deformationsalgorithmus durch die dadurch umfassten Einschränkungspunkte ("constraint points") für die Deformation der initialen, glatten Deformationsfläche. Vorteilhaft kann außerdem das einfache Vorhalten und Zuordnen von Annotationsinformationen basierend auf der Musterdarstellung ein automatisches Reporting von medizinischen Funden erleichtern.

Gemäß einem Aspekt des vorgeschlagenen Verfahrens kann das Bestimmen der Menge von charakteristischen Strukturpunkten das Segmentieren der anatomischen Struktur umfassen, wobei die Menge an Strukturpunkten basierend auf der segmentierten Struktur bestimmt wird.

Die Segmentierung kann beispielsweise pixelbasiert, voxelbasiert, kantenbasiert, flächenbasiert und/oder regionenbasiert erreicht werden. Der Segmentierung kann auch ein modellbasiertes Verfahren zu Grunde liegen, wobei Annahmen über das zu segmentierende Objekt eingehen. Die Segmentierung kann durch die Recheneinheit automatisiert oder halbautomatisiert umgesetzt sein. Beispielsweise können Startpunkte oder Keimzellen oder eine grobe Kontureninformation für die Segmentierung manuell gesetzt werden. In einer bevorzugten Variante wird jedoch ein Verfahren des maschinellen Lernens, d.h. eine trainierte Funktion, für die Segmentierung der anatomischen Struktur eingesetzt. Insbesondere kann ein neuronales Netz in Form eines sogenannten U-Net (siehe beispielsweise: Ronneberger O et al. U-Net: Convolutional Networks for Biomedical Image Segmentation. https://doi.org/10.48550/arXiv.1505.04597), insbesondere ein sogenannten nnU-Net (siehe beispielsweise: Isensee F et al. nnU-Net: Self-adapting Framework for U-Net-Based Medical Image Segmentation. https://doi.org/10.48550/arXiv.1809.10486), eingesetzt werden. Es können jedoch auch andere aus dem Stand der Technik bekannte Architekturen genutzt werden, insbesondere solche, welche auf einem Deep Learning Model mit einer Encoder-Decoder Architektur basieren.

Das Segmentieren kann umfassen, dass die gesamte anatomische Struktur segmentiert wird. Es kann umfassen, dass jeweils Teilstrukturen der anatomischen Struktur getrennt segmentiert werden. Beispielsweise kann eine knochenweise Segmentierung vorliegen, wenn die anatomisches Struktur eine Teil des Skeletts umfasst. Beispielsweise kann jeder Finger, insbesondere alle zu einem Finger gehörigen Fingerknochen, einer Hand einzeln segmentiert sein. Weiterhin kann umfasst sein, dass die anatomische Struktur in einer reduzierten Form segmentiert ist. Beispielsweise kann nur ein Subvolumen der anatomischen Struktur segmentiert werden. Dies kann beispielsweise jeweils ein Subvolumen um eine Mittelachse einer Knochenstruktur, etwa eines jeweiligen Fingers einer Hand, umfassen. Insbesondere bei einer Verwendung einer trainierten Funktion ist das Ergebnis der Segmentierung abhängig von den verwendeten Trainingsdaten. Umfassen die Trainingsdaten als Vergleichsdaten jeweils lediglich ein Subvolumen der anatomischen Struktur, wird das Ergebnis der Segmentierung basierend auf der trainierten Funktion entsprechend vorliegen. Gleiches gilt für ein anderweitiges Ergebnis der Segmentierung. Basierend auf einer segmentierten Struktur kann vorteilhaft vereinfacht und robust eine Menge von charakteristischen Strukturpunkten, insbesondere auch automatisch, bestimmt werden.

Weiterhin kann vorgesehen sein, dass mit einer Segmentierung eine Bestimmung weiterer Informationen, beispielsweise Annotationsinformationen oder Kennzeichnungen, einhergeht. Beispielsweise können segmentierte Bereiche der anatomischen Struktur jeweils als einer Teilstruktur der anatomischen Struktur zugehörig gekennzeichnet werden. Insbesondere mittels einer trainierten Funktion können besonders einfach und automatisch, insbesondere auch in einem Schritt mit der Segmentierung, die segmentierten Bereiche gelabelt, d.h. gekennzeichnet bzw. annotiert, werden.

Gemäß einem Aspekt des vorgeschlagenen Verfahrens kann die Menge von charakteristischen Strukturpunkten eine Mittellinie der anatomischen Struktur repräsentieren. Insbesondere können auch mehrere Mittellinien repräsentiert werden, wenn die anatomische Struktur mehrere interessierende Teilstrukturen umfasst. Umfasst die anatomische Struktur beispielsweise zumindest einen Teilbereich der Hand, kann für jeden Finger, insbesondere auch für die zu einem Finger gehörigen Fingerknochen, jeweils eine Mittellinie bestimmt werden.

Umfasst die anatomische Struktur einen Teil der Skelettstruktur, so kann für jeden Knochen der interessierenden anatomischen Struktur eine Mittellinie bestimmt werden. Weiterhin kann dann das Bereitstellen der zweidimensionalen Musterdarstellung umfassen eine Mustermittellinie bzw. mehrere Mustermittellinen bereitzustellen. Das Bestimmen der Menge von Musterpunkten basiert dann auf einem Abbilden der Menge von Strukturpunkten auf die Mustermittelachse bzw. -achsen. Insbesondere kann das Bestimmen der Menge an Musterpunkten umfassen, jeweils als Gegenstück zu einem charakteristischen Strukturpunkt auf einer Mittellinie in der Musterdarstellung einen Punkt an einer gleichen relativen Position innerhalb der Mustermittellinie zu bestimmen.

Die Mittellinie der anatomischen Struktur kann vorteilhaft basierend auf der segmentierten anatomischen Struktur bestimmt werden. Beispielsweise kann ein Distanz-Transformationsbasierter Skelettierungsalgorithmus ("DTF-Skeletonization") auf die segmentierte Struktur angewendet werden (siehe beispielsweise: Boskamp T et al. Geometrical and structural analysis of vessel systems in 3D medical image datasets. https://www.worldscientific.com/doi/pdf/10.1142/9789812701046_0001). Beispielsweise könnte auch ein Verfahren nach Lee T.C. et al (Lee T.C. et al, Building Skeleton Models via 3-D Medial Surface Axis Thinning Algorithms. https://doi.org/10.1006/cgip.1994.1042) oder ein ähnliches Verfahren angewendet werden. Auch ist beispielsweise denkbar, eine Mittelachse basierend auf einem Verfahren des maschinellen Lernens mit oder ohne eine vorherige Segmentierung zu bestimmen. Beispielsweise kann eine zuvor erwähnte trainierte Funktion basierend auf einer nnUnet-Architektur trainiert werden als Ausgabedaten direkt eine Mittelachse der anatomischen Struktur auszugeben. Entsprechend erfolgt ein Training der trainierten Funktion basierend auf Trainingsdaten und Vergleichsdaten umfassend Trainings-Mittellinien von anatomischen Trainings-Strukturen.

Ein Abbilden der charakteristischen Strukturpunkte auf die charakteristischen Musterpunkte kann vorteilhaft erleichtert sein, insbesondere bei ausgedehnteren Strukturen umfassend mehrere Teilstrukturen, wenn bei einer Segmentierung und/oder Skelettisierung eine Annotationsinformation miterfasst wird, beispielsweise eine Zugehörigkeit zu einer Teilstruktur der anatomischen Struktur. Derart können Teilstrukturen der anatomischen Struktur vorteilhaft einfach Teilstrukturen der Musterdarstellung zugeordnet werden.

Die Nutzung der Mittellinie im vorgeschlagenen Verfahren ist eine vorteilhaft einfache Umsetzung da hier auf eine Vielzahl etablierter Algorithmen zur Extraktion der Mittellinie zurückgegriffen werden kann. Weiterhin stellt es eine vorteilhafte und für einen Betrachter einfach nachzuvollziehende Darstellung der anatomischen Struktur im entfalteten 2D-Bilddatensatz dar. Insbesondere kann dies bedeuten, dass das 2D-Entfaltungsbild der anatomischen Struktur basierend auf einer Röntgenbildgebung einem koronalen Schnitt durch dessen Zentrum entspricht, wenn die Bildgebung mit der flach auf einem Untersuchungstisch liegenden anatomischen Struktur durchgeführt worden wäre.

Gemäß einem weiteren Aspekt des vorgeschlagenen Verfahrens können außerdem zusätzliche, unterstützende Strukturpunkte im ersten 3D-Bilddatensatz bestimmt werden, welche in einer Ebene mit der, und insbesondere auch entlang der, Mittelachse im ersten 3D-Bilddatensatz bzw. wenn mehrere Mittelachsen bestimmt wurden jeweils in einer Ebene mit einer jeweiligen Mittelachse angeordnet sind und/oder welche einen Übergang zwischen Teileinheiten, d.h. Teilstrukturen, der anatomischen Struktur interpolieren.

Die unterstützenden Strukturpunkte als weitere Eingabepunkte für den Deformationsalgorithmus können eine Kontrolle ermöglichen, wie die verformte Deformationsfläche durch die anatomische Struktur bzw. deren Teilstrukturen verläuft. Derart kann beispielsweise sichergestellt werden, dass die verformte planare Deformationsfläche wie eine koronale Ebene in der standardanatomischen Position durch die anatomische Struktur, beispielsweise einen jeweiligen Knochen, verläuft. Außerdem können zusätzliche unterstützende Strukturpunkte in Übergängen zwischen Teilstrukturen vorteilhaft unterstützen zu standardisieren, wie die verformte Deformationsfläche durch die Übergangsbereiche verläuft.

Entsprechend können dann auch unterstützende Musterpunkte in der Musterdarstellung als Gegenstück zu den unterstützenden Strukturpunkten und zugehörige Flächenpunkte in der Deformationsfläche als weitere Eingabepunkte für den Deformationsalgorithmus bestimmt werden. Bei der Deformation der Deformationsfläche wird dann jeder unterstützende Flächenpunkt zu dem entsprechenden, zugehörigen unterstützenden Strukturpunkt bewegt.

Gemäß einem weiteren Aspekt des vorgeschlagenen Verfahrens kann das Bestimmen der Menge von Musterpunkten ein Ausrichten der Musterdarstellung und der anatomischen Struktur zueinander und/oder ein Anpassen der Musterdarstellung an die anatomische Struktur umfassen.

Für eine vorteilhafte Abbildung der charakteristischen Strukturpunkte auf die Musterdarstellung kann eine vorherige Ausrichtung der Musterdarstellung und der anatomischen Struktur im 3D-Bilddatensatz vorgesehen sein. Die 2D-Musterdarstellung der anatomischen Struktur kann beispielsweise anhand eines Ausrichtens bestimmter Landmarken oder anhand einer Mittelachsenorientierung, z.B. durch die Berechnung einer Hauptkomponentenanalyse der Mittelachsen oder Mittelachsensegmente, vorgenommen werden. Beispielsweise kann eine Musterdarstellung umfassend einer oder mehrere Mustermittelachsen im 3D-Koordinatensystem des 3D-Bilddatensatzes so platziert werden, dass es mit der Mittelachse oder den Mittelachsen der anatomischen Struktur im 3D-Bilddatensatz ausgerichtet ist, z.B. durch Berechnung einer Methode der kleinsten Quadrate.

Weiterhin kann vorgesehen sein, dass beispielsweise eine Längen- und/oder Breitenanpassung der Musterdarstellung oder Teileinheiten der Musterdarstellung an die anatomische Struktur oder deren Teilstrukturen erfolgt, um zu einer verbesserten Abbildung der charakteristischen Strukturpunkte auf die Musterdarstellung zu gelangen. Beispielsweise kann die Länge bzw. können die Längen einer bzw. der mehreren Mustermittelachsen auf die Länge der entsprechenden Mittelachse bzw. -achsen der anatomischen Struktur angepasst werden. Dies kann vorteilhaft unterschiedliche Proportionen im Vergleich zur ursprünglichen Vorlage berücksichtigen und Dehnungen oder Kompressionen, selbst im Fall von physisch oder an den Grenzen des Bildvolumens abgeschnittener Teilstrukturen vermeiden.

Gemäß einem weiteren Aspekt des vorgeschlagenen Verfahrens kann das Verfahren weiterhin ein Bereitstellen eines dritten 3D-Bilddatensatzes umfassend die anatomische Struktur, ein Lokalisieren der anatomischen Struktur in dem dritten3D-Bilddatensatz, ein Bestimmen eines Teilbilddatensatzes basierend auf dem dritten 3D-Bilddatensatzes und der lokalisierten anatomischen Struktur, und ein Bereitstellen des Teilbilddatensatzes als ersten 3D-Bilddatensatz umfassen.

Insbesondere kann der dritte 3D-Bilddatensatz einen größeren Bildausschnitt abbilden als der erste oder zweite 3D-Bilddatensatz. Insbesondere kann der erste 3D-Bilddatensatz ein Subvolumen des dritten 3D-Bilddatensatzes sein und auf Messdaten aus dem gleichen Aufnahmevorgang wie der dritte 3D-Bilddatensatz basieren. Beispielsweise kann der dritte 3D-Bilddatensatz ein Ganzkörper-Bilddatensatz oder ein Abdomen-Bilddatensatz sein. Nicht nur aber insbesondere im Falle komplexer Unfälle werden häufig großräumige 3D-Bilddatensätze erzeugt, um einen schnellen Überblick über die gesamten Auswirkungen auf den Körper eines Patienten zu erhalten. Basierend darauf können dann interessierende anatomische Strukturen identifiziert bzw. lokalisiert und ein Subvolumen umfassend diese interessierenden Strukturen für eine entfaltete Darstellung und weitergehende Diagnose herangezogen werden.

Ein Lokalisieren der anatomischen Struktur im dritten 3D-Bilddatensatz kann beispielsweise mittels einer trainierten Funktion umgesetzt sein. Beispielsweise könnte ein Ansatz wie bei Zheng, Y et al. (3D Deep Learning for Efficient and Robust Landmark Detection in Volumetric Data. https://doi.org/10.1007/978-3-319-24553-9_69 ) oder in Viola P. and Jones M. (Rapid object detection using a boosted cascade of simple features, https://doi.org/10.1109/CVPR.2001.990517.) oder auch in Ghesu et al. (An Artificial Agent for Anatomical Landmark Detection in Medical Images. https://doi.org/10.1007/978-3-319-46726-9_27) beschrieben angewendet werden.

Basierend auf der lokalisierten anatomischen Struktur im dritten 3D-Bilddatensatz kann ein Teilvolumen des 3D-Bilddatensatzes, d.h. der Teilbilddatensatz, bestimmt werden, welcher insbesondere die anatomische Struktur umfasst, wobei weniger interessierende Bildbereiche des dritten 3D-Bilddatensatzes nicht mehr umfasst sind. Basierend auf einem Teilbilddatensatz kann vorteilhaft eine effizientere und robustere Weiterverarbeitung im vorgeschlagenen Verfahren erfolgen.

Gemäß einem weiteren Aspekt des vorgeschlagenen Verfahrens kann vom ersten, dreidimensionalen Bilddatensatz zumindest teilweise eine weitere, gleichartige anatomische Struktur umfasst sein, wobei das Bestimmen der Menge an charakteristischen Strukturpunkte dann ein Separieren der anatomischen Struktur und der weiteren, gleichartigen anatomischen Struktur umfassen kann.

Gemäß einem weiteren Aspekt des vorgeschlagenen Verfahrens kann zumindest bei einem Schritt des Verfahrens ein Verfahren des maschinellen Lernens eingesetzt werden.

Ein Verfahren des maschinellen Lernens kann beispielsweise wie bereits zuvor beschrieben beim Schritt des Bestimmens der Menge von Strukturpunkten und/oder beim Schritt des Segmentierens und/oder beim Schritt des Lokalisierens eingesetzt werden
Vorteilhafterweise kann einer dieser Schritte auf maschinellem Lernen, insbesondere einem Anwenden einer trainierten Funktion auf den ersten oder dritten dreidimensionalen Bilddatensatz als Eingabedaten, basieren. Dabei können Eingabedaten der trainierten Funktion auf dem Bilddatensatz basieren, insbesondere den Bilddatensatz umfassen. Ferner kann die Menge an Strukturpunkten, die segmentierte anatomische Struktur, oder die Lokalisation der anatomischen Struktur bzw. der Teilbilddatensatz als Ausgabedaten der trainierten Funktion bereitgestellt werden bzw. in einem folgenden Schritt auch als Eingaben für eine weitere trainierte Funktion dienen.

Die trainierte Funktion kann durch ein Verfahren des Maschinenlernens trainiert sein. Insbesondere kann die trainierte Funktion ein neuronales Netzwerk, insbesondere ein faltendes neuronales Netzwerk (engl. convolutional neural network, CNN) bzw. ein Netzwerk umfassend eine Faltungsschicht (engl. convolutional layer) sein. Die trainierte Funktion bildet Eingabedaten auf Ausgabedaten ab. Hierbei können die Ausgabedaten weiterhin von einem oder mehreren Parametern der trainierten Funktion abhängen. Der eine oder die mehreren Parameter der trainierten Funktion können durch ein Training bestimmt und/oder angepasst werden. Das Bestimmen und/oder Anpassen des einen oder mehrerer Parameter der trainierten Funktion kann insbesondere auf einem Paar aus Trainingseingabedaten und zugehörigen Trainingsausgabedaten, insbesondere Vergleichsausgabedaten, basieren, wobei die trainierte Funktion zum Bereitstellen der Menge an Strukturpunkten, der segmentierten anatomischen Struktur, der Lokalisation der anatomischen Struktur bzw. des Teilbilddatensatzes angewendet wird. Insbesondere kann das Bestimmen und/oder Anpassen auf einem Vergleich der Trainingsabbildungsdaten und der Trainingsausgabedaten, insbesondere der Vergleichsausgabedaten, basieren. Dient die trainierte Funktion beispielsweise einer Segmentierung so können für das Training 3D-Trainingsbilddatensätze umfassend die anatomische Struktur und Vergleichsbilddatensätze umfassend die segmentierte anatomische Struktur bereitgestellt werden, welche anschließend mit der Ausgabe der trainierten Funktion verglichen werden könne. Im Allgemeinen wird auch eine trainierbare Funktion, das heißt, eine Funktion mit noch nicht angepassten einen oder mehreren Parametern, als trainierte Funktion bezeichnet.

Andere Begriffe für trainierte Funktionen sind trainierte Abbildungsvorschrift, Abbildungsvorschrift mit trainierten Parametern, Funktion mit trainierten Parametern, Algorithmus basierend auf künstlicher Intelligenz, Algorithmus des maschinellen Lernens. Ein Beispiel für eine trainierte Funktion ist ein künstliches neuronales Netzwerk, wobei die Kantengewichte des künstlichen neuronalen Netzwerks den Parametern der trainierten Funktion entsprechen. Anstatt des Begriffs "neuronales Netzwerk" kann noch der Begriff "neuronales Netz" verwendet werden. Insbesondere kann eine trainierte Funktion auch ein tiefes künstliches neuronales Netzwerk sein (engl. deep neural network, deep artificial neural network). Ein weiteres Beispiel für eine trainierte Funktion ist eine "Support Vector Machine", weiterhin sind auch insbesondere andere Algorithmen des maschinellen Lernens als trainierte Funktion einsetzbar.

Vorteilhafterweise weist die trainierte Funktion, insbesondere das neuronale Netzwerk, eine Eingabeschicht und eine Ausgabeschicht auf. Dabei kann die Eingabeschicht der trainierten Funktion zum Empfangen der Eingabedaten ausgebildet sein. Ferner kann die Ausgabeschicht zum Bereitstellen von Abbildungsdaten, insbesondere Ausgabedaten, ausgebildet sein. Ferner können die Eingabeschicht und/oder die Ausgabeschicht jeweils mehrere Kanäle, insbesondere Neuronen, umfassen. Vorteilhafterweise kann zumindest ein Parameter der trainierten Funktion basierend auf einem Vergleich eines Trainingsdatensatzes mit einem Vergleichsdatensatz, beispielsweise umfassend eine segmentierte Struktur oder eine lokalisierte anatomische Struktur oder eine Menge an bestimmten Strukturpunkten, angepasst sein.

Beispiele für mögliche, konkrete Architekturen, welche im Rahmen des vorgeschlagenen Verfahrens in den Teilschritten des Verfahrens eingesetzt werden können, sind dabei bereits oben erwähnt.

Gemäß einem weiteren Aspekt des vorgeschlagenen Verfahrens kann das Verfahren umfassen die anatomische Struktur in eine Mehrzahl an Untereinheiten zu unterteilen, wobei zumindest die Schritte des Berechnens der ersten deformierten Deformationsfläche und des Berechnens der Menge von Voxelpositionen für jede Untereinheit separat durchgeführt wird, und wobei das Berechnen des zweidimensionalen, entfalteten Bilddatensatz basierend auf den Voxelpositionen der Mehrzahl an Untereinheiten basiert.

Starke Versätze oder Biegungen zwischen charakteristischen Strukturpunkten, beispielweise von Mittellinien, können zu komplexen Deformationen der Deformationsfläche führen. Dies kann dazu führen, dass die deformierte Deformationsfläche Schleifen oder Überschneidungen bildet, was zu Artefakten führen kann, beispielsweise eine doppelte Darstellung von Strukturen oder Deformationen. Um dies zu vermeiden, kann es vorteilhaft die anatomische Struktur in Untereinheiten zu unterteilen und eine separate Entfaltung für jede Untereinheit durchzuführen. Anschließend erfolgt dann eine Zusammensetzung zu einem gemeinsamen entfalteten 2D-Bilddatensatz. Beispielsweise können jeweils die Finger einer Hand die Untereinheiten der anatomische Struktur darstellen.

Gemäß einem weiteren Aspekt des vorgeschlagenen Verfahrens kann zumindest eine zweite, deformierte Deformationsfläche bestimmt werden, indem die erste deformierte Deformationsfläche entlang ihrer ortsabhängigen Normalenvektoren verformt wird. Basierend auf der zweiten deformierten Deformationsfläche und dem ersten oder zweiten 3D-Bilddatensatz kann dann ein zweiter, entfalteter 2D-Bilddatensatzes bestimmt werden. Die Berechnung des zweiten entfalteten 2D-Bilddatensatz kann analog zu der Berechnung des ersten entfalteten 2D-Bilddatensatz erfolgen. Insbesondere können auch mehr als zwei deformierte Deformationsflächen basierend auf einer ortsabhängigen Verformung der ersten deformierten Deformationsfläche entlang ihrer ortsabhängigen Normalenvektoren bestimmt werden, worauf basierend entsprechend mehr als zwei entfaltete 2D-Bilddatensätze bestimmt werden können.

Durch die Bestimmung zumindest einer zweiten deformierten Deformationsfläche und eines entsprechenden entfalteten 2D-Bilddatensatz kann zumindest eine zweite Schicht der anatomischen Struktur in einer entfalteten Darstellung abgebildet werden. Vorteilhaft kann bei einer Berechnung einer Mehrzahl an deformierten Deformationsflächen ein sogenannter 3d-Stapel der anatomischen Struktur in einer entfalteten Darstellung bereitgestellt werden.

Bei Verwendung beispielsweise von charakteristischen Strukturpunkten, welche jeweils die Mittelachse bzw. Mittelachsen der anatomischen Struktur repräsentieren, entspricht der entfaltete 2D-Bilddatensatz einem koronalen Schnitt durch das Zentrum, wenn die Bildgebung mit der flach auf dem Tisch liegenden anatomischen Struktur erfolgt wäre. Durch die Bestimmung einer zweiten oder dritten deformierten Deformationsfläche können Teile der anatomischen Struktur anterior oder posterior visualisieren werden.

Beispielsweise kann ein deformiertes Oberflächengitter weiter deformiert werden, indem alle Gitterknoten/Vertizes schrittweise in Richtung ihrer Normalvektoren verschoben werden.

Ein entfalteter Bilddatensatz kann dann erneut erstellt werden, indem die ursprünglichen Bildwerte des ersten oder zweiten 3D-Bilddatensatzes in der gleichen Weise wie zuvor beschrieben berechnet werden.

Vorteilhaft kann basierend darauf eine Stapel an entfalteten 2D-Bilddatensätzen bereitgestellt werden, welche die anatomische Struktur in verschiedenen Schichten visualisiert. Beispielsweise können auch 3D-Darstelllungen (z.B. "Cinematic Rendering") basierend auf dem Stapel an entfalteten 2D-Bilddatensatz generiert werden.

Gemäß einem weiteren Aspekt des vorgeschlagenen Verfahrens kann der bereitgestellte, zweite 3D-Bilddatensatz den gleichen Bildausschnitt abbilden wie der erste 3D-Bilddatensatz, jedoch eine andere Bildauflösung aufweisen als der erste 3D-Bilddatensatz und/oder spektrale Bildinformationen umfassen.

Wie bereits beschrieben, kann ein bereitgestellter zweiter 3D-Bildatensatz dabei ein Bilddatensatz sein, welcher auf Messdaten aus dem gleichen Aufnahmevorgang wie der erste 3D-Bilddatensatz basiert und damit Lage und Position der anatomischen Struktur im zweiten 3D-Bilddatensatz unverändert relativ zum ersten 3D-Bilddatensatz vorliegt. Beispielsweise kann der erste 3D-Bilddatensatz oder ein dritter 3D-Bilddatensatz, auf welchem ein erster 3D-Bilddatensatz basiert eine gröbere Bildauflösung aufweisen als der zweite 3D-Bilddatensatz. Beispielsweise kann für den ersten oder dritten 3D-Bilddatensatz eine Bildauflösung rekonstruiert sein, welche gröber ist als physikalisch und mittels der Messdaten möglich, um eine zeiteffiziente Rekonstruktion und Verarbeitung der Daten im vorgeschlagenen Verfahren zu ermöglichen. Für die Berechnung eines höher aufgelösten entfalteten Bilddatensatzes kann dann jedoch trotzdem auf ein 3D-Bilddatensatz zurückgegriffen werden, der mit einer höheren Bildauflösung rekonstruiert ist. Vorteilhaft können solche hochaufgelösten, entfalteten Bilddatensätze unterstützen kleine Struktur und mögliche Verletzungen verbessert zu visualisieren.

Ebenso können spektrale Messdaten verwendet werden, um einen 3D-Bilddatensatz bereitzustellen, welcher spektrale Informationen umfasst. Beispielsweise kann ein 3D-Bilddatensatz basierend auf einer Materialzerlegung bereitgestellt werden. Auch hier kann ein analog entfalteter 2D-Bilddatensatz bereitgestellt werden, welcher entsprechend eine zweidimensionale Abbildung der Materialzerlegungskarten, beispielsweise eine Jodkarte oder eine Knochenmarkkarte, darstellt. Solche Bilddaten können dann in den 2D- oder 3D-Visualisierungen der entfalteten Bilddaten beispielweise überlagert dargestellt werden, um vaskuläre Anomalien oder mikrotraumatische Knochenverletzungen hervorzuheben.

Gemäß einem weiteren Aspekt des vorgeschlagenen Verfahrens kann das Verfahren außerdem umfassen, dass
- der erste oder zweite entfaltete 2D-Bilddatensatz in einer Benutzerschnittstelle angezeigt wird,
- eine 2D-Position in dem erstem oder zweiten zweidimensionalen, entfalteten Bilddatensatz basierend auf einer manuellen Benutzereingabe bestimmt wird,
- eine 3D-Position in dem ersten, zweiten oder dritten dreidimensionalen Bilddatensatz basierend auf der 2D-Position und einem Ergebnis des Deformationsalgorithmus bestimmt wird, und
- ein Bildausschnitt des ersten, zweiten oder dritten 3D-Bilddatensatzes und/oder eine Querschnittsdarstellung davon umfassend die bestimmte 3D-Position und/oder eine Markierung repräsentierend die 3D Position im ersten, zweiten oder dritten 3D- Bilddatensatz und/oder in der Querschnittsdarstellung auf der Benutzerschnittstelle angezeigt wird.

Auch kann das vorgeschlagene Verfahren umfassen, dass
- der erste, zweite oder dritte 3D-Bilddatensatz und/oder zumindest eine Querschnittsdarstellungen davon mittels einer Benutzerschnittstelle angezeigt wird,
- eine 3D Position in dem ersten, zweiten oder dritten 3D-Bilddatensatz und/oder der Querschnittsdarstellung basierend auf einer manuellen Benutzerangabe bestimmt wird,
- eine 2D-Position in dem ersten oder zweiten entfalteten 2D-Bilddatensatz basierend auf der 3D-Position und einem Ergebnis des Deformationsalgorithmus bestimmt wird,
- ein Bildausschnitt des ersten oder zweiten entfalteten 2D-Bilddatensatzes umfassend die bestimmte 2D-Position und/oder eine Markierung repräsentierend die 2D-Position im ersten oder zweiten oder dem weiteren entfalteten 2D-Bilddatensatz auf der Benutzerschnittstelle angezeigt wird.

Da vorteilhaft eine bidirektionale Zuordnung zwischen 3D-Positionen im ersten oder zweiten 3D-Bilddatensatz und 2D-Positionen im entfalteten 2D-Bilddatensatz existiert, kann die entsprechende Position im Original-3D-Bilddatensatz bestimmt werden, wenn eine 2D-Position im entfalteten Bild ausgewählt wird ("2D-3D-Navigation") und andersherum ("3D-2D-Navigation"). Dies lässt sich auch auf Positionen in den angrenzenden Schnitten eines oben beschriebenen durchblätterbaren Stapels an mehreren entfalteten 2D-Bilddatensätzen erweitern. Vorteilhaft kann eine benutzergesteuerte Navigation zwischen den 3D- und 2D-Bilddatensätzen und eine entsprechende Darstellung mittels geeignete Benutzerschnittstellen, beispielsweise in Form einer Darstellungseinheit, etwa eines Monitors oder Displays, und einer Tastatur und/oder Maus, oder auch umfassend ein Touchscreen, ermöglicht werden, welche eine manuelle Benutzereingabe und die Darstellung der Bilddaten erlauben.

Ein dargestellter Bildausschnitt kann beispielsweise zentriert um die markierte Position gewählt sein. Der dargestellte Bildausschnitt im Falle eines 3D-Bilddatensatz kann auch in Form mehrerer, insbesondere dreier orthogonaler Schnittbilder, welche beispielsweise um die markierte Position zentriert sind, dargestellt werden. Eine Markierung kann eine farbliche oder anderweitige Hervorhebung der markierten Position, beispielsweise in Form eines Markers, welche in der Darstellung beispielsweise den Bilddaten überlagert dargestellt ist, umfassen.

Die Erfindung betrifft in einem weiteren Aspekt außerdem eine Bereitstellungseinheit, welche zur Ausführung eines vorgeschlagenen Verfahrens und seiner Varianten ausgebildet ist.

Die Vorteile der vorgeschlagenen Bereitstellungseinheit entsprechen im Wesentlichen den Vorteilen des vorgeschlagenen Verfahrens zum Bereitstellen zumindest eines zweidimensionalen, entfalteten Bilddatensatzes. Hierbei erwähnte Merkmale, Vorteile oder alternative Ausführungsformen können ebenso auch auf die anderen beanspruchten Gegenstände übertragen werden und umgekehrt.

Die Bereitstellungseinheit kann eine Recheneinheit, eine Speichereinheit und/oder eine Schnittstelle umfassen. Die Bereitstellungseinheit, insbesondere die Komponenten der Bereitstellungseinheit, kann bzw. können zum Ausführen der einzelnen Schritte des vorgeschlagenen Verfahrens zum Bereitstellen zumindest eines ersten zweidimensionalen, entfalteten Bilddatensatzes und der zuvor beschriebenen Varianten ausgebildet sein. Die Schnittstelle kann zum Bereitstellen des ersten, zweiten und/oder dritten dreidimensionalen Bilddatensatzes ausgebildet sein. Sie kann außerdem zum Bereitstellen der zweidimensionalen Musterdarstellung der anatomischen Struktur und zum Bereitstellen des ersten und/oder zweiten zweidimensionalen, entfalteten Bilddatensatzes ausgebildet sein. Die Recheneinheit und/oder die Speichereinheit können zum Bestimmen der Menge von charakteristischen Strukturpunkten, zum Bestimmen der Menge von charakteristischen Musterpunkten, zum Bestimmen der Deformationsfläche, zum Berechnen der ersten und/oder zweiten deformierten Deformationsfläche, zum Berechnen der Voxelpositionen und zum Berechnen des zweidimensionalen, entfalteten Bilddatensatzes sein. Ebenso kann die Recheneinheit und/oder die Speichereinheit ausgebildet sein zum Lokalisieren der anatomischen Struktur im dritten, dreidimensionalen Bilddatensatz und zum Bestimmen des Teilbilddatensatzes. Die Bereitstellungseinheit kann selbst auch ausgebildet sein zum Berechnen, d.h. insbesondere Rekonstruieren, von Bilddatensätzen basierend auf bereitgestellten Messdaten.

Die Bereitstellungseinheit kann außerdem eine Benutzerschnittstelle in Form einer Darstellungseinheit umfassen, welche ausgebildet ist, den ersten, zweiten und/oder dritten dreidimensionalen Bilddatensatz und/oder Querschnittsdarstellungen davon darzustellen. Dies kann in Form eines Monitors, einen Touchscreens oder eines anderweitigen, geeigneten Anzeigegeräts umgesetzt sein. Die Bereitstellungseinheit kann außerdem eine Benutzerschnittstelle in Form einer Eingabeeinheit umfassen, welche ausgebildet ist, eine manuelle Benutzereingabe zu ermöglichen. Dies kann beispielsweise mittels einer Tastatur und Maus mit entsprechender Eingabemöglichkeit oder mittels einer anderweitigen, geeigneten Eingabeeinheit ermöglicht sein. Ebenso kann die Eingabeeinheit in die Darstellungseinheit integriert sein, beispielsweise in Form eines kapazitiven und/oder resistiven Eingabedisplays. Dabei kann die Eingabeeinheit außerdem durch Eingabe eines Nutzers eine Steuerung des vorgeschlagenen Verfahrens zum Bereitstellen eines zweidimensionalen, entfalteten Bilddatensatzes ermöglicht werden.

Weiterhin betrifft die Erfindung in einem weiteren Aspekt ein System umfassend ein medizinisches Bildgebungsgerät und eine Bereitstellungseinheit zum Bereitstellen eines zweidimensionalen, entfalteten Bilddatensatzes gemäß einer der oben beschriebenen Varianten.

Das medizinische Bildgebungsgerät kann dazu ausgebildet sein, den ersten, zweiten und/oder dritten dreidimensionalen Bilddatensatz aufzunehmen und/oder bereitzustellen.

Das medizinische Bildgebungsgerät kann vorzugsweise als Röntgenbildgebungssystem, insbesondere CT-System, mit einer Strahlenquelle und einem Strahlendetektor, ausgebildet sein. Es kann beispielsweise auch als Magnetresonanztomographieanlage (MRT) und /oder medizinisches Röntgengerät und/oder Positronenemissionstomographieanlage (PET) ausgebildet sein. Ferner kann das medizinische Bildgebungsgerät dazu ausgebildet sein, den ersten, zweiten und/oder dritten dreidimensionalen Bilddatensatz eines Untersuchungsobjekts einschließlich der Interessensregion, d.h. insbesondere einschließlich der anatomischen Struktur, aufzunehmen und für die Bereitstellungseinheit bereitzustellen. Alternativ kann das medizinische Bildgebungsgerät dazu ausgebildet sein, erste, zweite und/oder dritte Bilddaten, insbesondere erste, zweite und/oder dritte Projektionsabbildungen, des Untersuchungsobjekts einschließlich der anatomischen Sturktur aufzunehmen. Dabei kann das medizinische Bildgebungsgerät ferner dazu ausgebildet sein, die Bilddaten für die Bereitstellungseinheit bereitzustellen, wobei die Bereitstellungseinheit ausgebildet ist den ersten, zweiten und/oder dritten 3D-Bilddatensatz entsprechend aus den ersten, zweiten oder dritten Bilddaten zu rekonstruieren und für das weitere Verfahren bereitzustellen.

Insbesondere kann das medizinische Bildgebungsgerät als Röntgenbildgebungssystem, insbesondere CT-Gerät, umfassend einen photonenzählenden Röntgendetektor ausgebildet sein. Mittels direkt-konvertierenden, photonenzählenden Röntgendetektoren, beispielsweise basierend auf einem Halbleitermaterial wie CdTe oder CdZnTe oder ähnliche, können kleine Pixelgrößen und damit eine hohe Ortsauflösung im Detektor erreicht werden. Vorteilhaft können Messdaten bereitgestellt werden, welche eine hohe Ortsauflösung aufweisen, welche in eine hohe Bildauflösung der rekonstruierten Bilddatensätze übertragen werden kann. Die Bildauflösung kann dabei durch eine mögliche, vorherige Zusammenfassung von Messdaten und/oder die genutzen Rekonstruktionsparameter anpassbar sein. Dies kann eine verbesserte Diagnostik basierend auf den Bilddatensätzen vorteilhaft begünstigen.

Weiterhin kann der photonenzählende Röntgendetektor energieauflösend ausgebildet sein. Derart können auch spektrale Informationen, beispielsweise hinsichtlich einer Materialverteilung, bereitgestellt werden. Vorteilhaft können zusätzliche Informationen bereitgestellt werden, welche ebenfalls zu eine verbesserte Diagnostik basierend auf den Bilddatensätzen begünstigen können.

Die Vorteile des vorgeschlagenen medizinischen Bildgebungsgeräts entsprechen im Wesentlichen den Vorteilen des vorgeschlagenen Verfahrens zum Bereitstellen zweidimensionalen, entfalteten Bilddatensatzes und/oder der vorgeschlagenen Bereitstellungseinheit. Hierbei erwähnte Merkmale, Vorteile oder alternative Ausführungsformen können ebenso auch auf die anderen beanspruchten Gegenstände übertragen werden und umgekehrt.

Die Erfindung betrifft in einem weiteren Aspekt außerdem ein Computerprogrammprodukt mit einem Computerprogramm, welches in einen Speicher einer Bereitstellungseinheit zum Bereitstellen zumindest eines zweidimensionalen, entfalteten Bilddatensatzes gemäß einer der oben beschriebenen Varianten ladbar ist, mit Programmabschnitten, um alle Schritte des Verfahrens zum Bereitstellen zumindest eines zweidimensionalen, entfalteten Bilddatensatzes und seiner oben beschriebenen Varianten auszuführen, wenn die Programmabschnitte von der Bereitstellungseinheit ausgeführt werden. Das Computerprogrammprodukt kann insbesondere auf einem computerlesbares Speichermedium gespeichert sein.

Die Vorteile des vorgeschlagenen Computerprogrammprodukts bzw. computerlesbaren Speichermediumgs entsprechen im Wesentlichen den Vorteilen des vorgeschlagenen Verfahrens zum Bereitstellen eines zweidimensionalen, entfalteten Bilddatensatzes. Hierbei erwähnte Merkmale, Vorteile oder alternative Ausführungsformen können ebenso auch auf die anderen beanspruchten Gegenstände übertragen werden und umgekehrt.

Das Computerprogrammprodukt kann beispielsweise eine Software mit einem Quellcode, der noch kompiliert und gebunden oder nur interpretiert werden muss, oder einen ausführbaren Softwarecode umfassen, der zur Ausführung noch in die Bereitstellungseinheit zu laden ist. Durch das Computerprogrammprodukt kann das Verfahren zum Bereitstellen eines zweidimensionalen, entfalteten Bilddatensatzes mittels einer Bereitstellungseinheit schnell, identisch wiederholbar und robust ausgeführt werden. Computerprogrammprodukt ist so konfiguriert, dass es mittels der Bereitstellungseinheit die erfindungsgemäßen Verfahrensschritte ausführen kann.

Das Computerprogrammprodukt ist beispielsweise auf einem computerlesbaren Speichermedium gespeichert oder auf einem Netzwerk oder Server hinterlegt, von wo es in den Prozessor einer Bereitstellungseinheit geladen werden kann, der mit der Bereitstellungseinheit direkt verbunden oder als Teil der Bereitstellungseinheit ausgebildet sein kann. Weiterhin können Steuerinformationen des Computerprogrammprodukts auf einem elektronisch lesbaren Datenträger gespeichert sein. Die Steuerinformationen des elektronisch lesbaren Datenträgers können derart ausgestaltet sein, dass sie bei Verwendung des Datenträgers in einer Bereitstellungseinheit ein erfindungsgemäßes Verfahren durchführen. Beispiele für elektronisch lesbare Datenträger sind eine DVD, ein Magnetband oder ein USB-Stick, auf welchem elektronisch lesbare Steuerinformationen, insbesondere Software, gespeichert ist. Wenn diese Steuerinformation von dem Datenträger gelesen und in eine Bereitstellungseinheit gespeichert werden, können alle erfindungsgemäßen Ausführungsformen der vorab beschriebenen Verfahren durchgeführt werden.

Eine weitgehend softwaremäßige Realisierung hat den Vorteil, dass schon bisher verwendete Bereitstellungseinheiten auf einfache Weise durch ein Software-Update nachgerüstet werden können, um auf die erfindungsgemäße Weise zu arbeiten. Ein solches Computerprogrammprodukt kann neben dem Computerprogramm gegebenenfalls zusätzliche Bestandteile wie zum Beispiel eine Dokumentation und/oder zusätzliche Komponenten, sowie Hardware-Komponenten, wie zum Beispiel Hardware-Schlüssel (Dongles etc.) zur Nutzung der Software, umfassen.

Ausführungsbeispiele der Erfindung sind in den Zeichnungen dargestellt und werden im Folgenden näher beschrieben. In unterschiedlichen Figuren werden für gleiche Merkmale die gleichen Bezugszeichen verwendet. Es zeigen:
Fig. 1 ein schematisches Ablaufdiagramm des vorgeschagenen Verfahrens zum Bereitstellen zumindest eines zweidimensionalen, entfalteten Bilddatensatzes einer anatomischen Struktur,
Fig. 2 ein schematisches Ablaufdiagramm des Schritts des Bestimmens der Menge an charaktersistischen Strukturpunkten gemäß einem Aspekt des vorgeschlagenen Verfahrens,
Fig. 3 ein schematisches Ablaufdiagramm des Schritts des Bestimmens der Menge an charaktersistischen Musterpunkten gemäß einem Aspekt des vorgeschlagenen Verfahrens,
Fig. 4 ein schematisches Ablaufdiagramm zur Bereitstellung eines Teilbilddatensatzes eines 3D-Bilddatensatzes als ersten 3D-Bilddatensatz gemäß einem Aspekt des vorgeschlagenen Verfahrens,
Fig. 5 ein schematisches Ablaufdiagramm der Schritte des Berechnens einer deformierten Deformationsfläche, des Berechnens einer Menge an Voxelpositionen und des Berechnens des entfalteten 2D-Bilddatensatzes basierend auf Untereinheiten der anatomischen Struktur gemäß einem Aspekt des vorgeschlagenen Verfahrens,
Fig. 6 ein schematisches Ablaufdiagramm zum Bestimmen eines zweiten, entfalteten 2D-Bilddatensatzes basierend auf der ersten, deformierten Deformationsfläche gemäß einem Aspekt des vorgeschlagenen Verfahrens,
Fig. 7 ein schematisches Ablaufdiagramm gemäß einem Aspekts des vorgeschlagenen Verfahrens, wobei 2D- und zugehörige 3D-Positionen im entfalteten 2D-Bilddatensatz bzw. 3D-Bilddatensatz bestimmt und angezeigt werden,
Fig. 8 eine weitere schematische Darstellung eines Ablaufs des vorgeschlagenen Verfahrens gemäß einer Ausführungsvariante,
Fig. 9 eine schematische Darstellung einer bestimmten Menge an charakteristischen Strukturpunkten und zugehörigen charakteristischen Musterpunkten am Beispiel von extrahierten Mittellinien einer Hand als anatomischen Struktur,
Fig. 10 eine vereinfachte, schematische Veranschaulichung zur Bestimmung einer zweiten, deformierten Deformationsfläche basierend auf einer ersten, deformierten Deformationsfläche gemäß einem Aspekt des vorgeschlagenen Verfahrens,
Fig. 11 eine schematische Darstellung einer Bereitstellungseinheit, welche zur Ausführung eines vorgeschlagenen Verfahrens und seiner Aspekte ausgebildet ist,
Fig. 12 eine schematische Darstellung eines Systems aufweisend ein medizinisches Bildgebungssgerät und eine Bereitstellungseinheit.

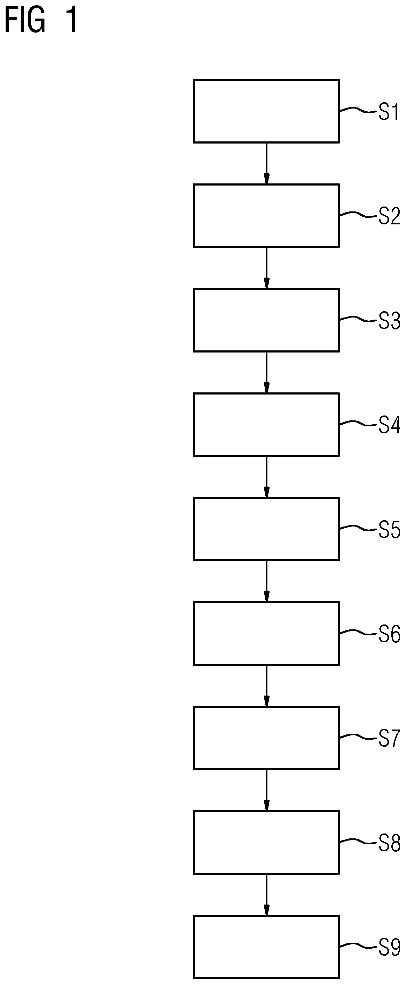

Fig. 1 zeigt ein schematisches Ablaufdiagramm des vorgeschagenen, computerimplementierten Verfahrens zum Bereitstellen zumindest eines ersten entfalteten 2D-Bilddatensatzes EBDS1 einer anatomischen Struktur AS.

Das Verfahren kann mit dem Bereitstellen S1 eines ersten 3D-Bilddatensatzes BDS1, der die anatomische Struktur umfasst, beginnen. Die anatomische Struktur kann insbesondere eine anatomische Struktur eines menschlichen und/oder tierischen Patienten sein oder von einem Untersuchungsphantom umfasst sein. Beispielsweise kann die anatomische Struktur zumindest einen Teilbereich der Hand, des Armes oder des Fußes umfassen.

In einem weiteren Schritt S2 wird eine Menge von charakteristischen Strukturpunkten SP der anatomischen Struktur basierend auf dem ersten dreidimensionalen Bilddatensatz BDS1 bestimmt. Die Menge an charakteristischen Strukturpunkte SP kann besonders vorteilhaft eine Mittellinie der anatomischen Struktur AS oder mehreren Mittellinien der anatomischen Struktur AS, wenn diese mehrere Untereinheiten umfasst, repräsentieren. Beispielsweise kann sich die Menge an charakteristischen Strukturpunkten SP auf den Mittellinien der Finger, insbesondere der zu den Fingern gehörigen Fingerknochen, befinden. Der Bestimmung der Menge charakteristischen Strukturpunkten SP kann eine Segmentierung S21 der antomischen Struktur AS im 3D-Bilddatensatz vorangehen. Besonders vorteilhaft kann eine Segmentierung S21 mittels eines Verfahrens des maschinellen Lernens, d.h. mit einer trainierten Funktion umgesetzt sein. Basierend auf einer segmentierten anatomischen Struktur kann besonders vorteilhaft, beispielsweise mittels eines Skelettisierungsalgorithmus, beispielsweise einer DTF-Skeletoniziation, die Mittelline bzw. -linien der anatomischen Struktur zu extrahieren.

Weiterhin kann es vorkommen, dass vom ersten, dreidimensionalen Bilddatensatz EBDS1 zumindest teilweise eine weitere, gleichartige anatomische Struktur umfasst ist. Beispielsweise kann zumindest eine zweite Hand zumindest teilweise im ersten 3D-Bilddatensatz abgebildet sein. In diesem Fall kann das Verfahren umfassen, dass das Bestimmen der Menge an charakteristischen Strukturpunkte umfasst, die anatomische Struktur und die weitere anatomische Struktur, insbesonderer auch nach einer Segmentierung, zu separieren.

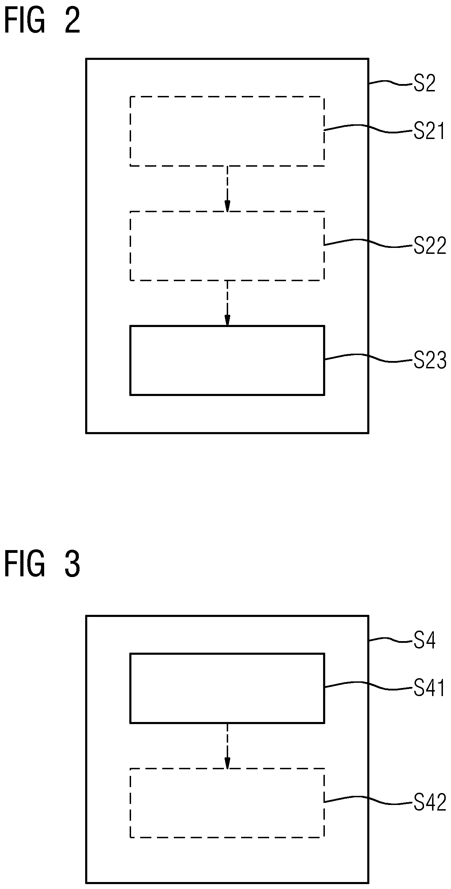

Wie auch in Fig. 2 gezeigt, kann der Schritt des Bestimmens der Menge an charakteristischen Strukturpunkten SP beispielsweise umfassen, eine Segmentierung S21 der antomischen Struktur im ersten 3D-Bilddatensatz BDS1 durchzuführen, ein Separieren S22 der anatomischen Struktur AS von einer weiteren, gleichartigen anatomischen Struktur vorzunehmen, falls vorhanden, und anschließend beispielsweise eine Menge an charakteristischen Strukturpunkten SP zu bestimmen, welche eine Mittellinie der anatomischen Struktur repräsentiert S23. In anderen Ausführungsvarianten kann der Schritt S2 auch anderweitig ausgestaltet sein. Beispielsweise kann auch vorgesehen sein, dass eine Mittellinie direkt, beispielsweise mittels eines Verfahrens des maschinellen Lernens aus den ersten 3D-Bilddatensatz BDS1 extrahiert wird.

Ein Separieren S22 kann dabei unter zu Hilfenahme einer Lokalisierung und Segmentierung der anatomischen Sturkturen und einer darauf basierenden erzeugten Maske zur Ausmakierung der weiteren antomischen Struktur, insbesondere auch nach einer Bestimmung von charakteristischen Strukturpunkten, erreicht werden. Auch kann direkt aus der Segmentierung insbesondere mittels einer trainierten Funktion eine Zuorndung bzw. Kennzeichnung der segmentierten Strukturen als zur einen oder andern anatomischen Struktur gehörig einhergehen, worauf basierend ein Separieren ermöglicht ist.

In einem weiteren Schritt S3 wird dann einer zweidimensionalen Musterdarstellung der anatomischen Struktur AS bereitgestellt. Die Musterdarstellung kann auch Vorlage oder "template" genannt werden. Die Musterdarstellung kann eine standardisierte Darstellung der anatomischen Struktur AS repräsentieren. Betrifft das Verfahren beispielsweise die Hand oder zumindest einen Teilbereich der Hand, so kann die 2D-Musterdarstellung die Anatomie einer Hand, insbesondere die Anordnung der Handknochen, in einer standardisierten Form abbilden. Die Musterdarstellung kann die Anatomie der anatomischen Struktur AS auch in einer reduzierten Form abbilden. Umfassen die charakteristischen Strukturpunkte SP beispielsweise eine Mittelachse der anatomischen Struktur, so kann die Musterdarstellung ebenfalls eine bereitgestellte Mustermittelachse einer anatomischen Musterstruktur umfassen. Insbesondere kann die Musterdarstellung über ein reine Abbildung der Anatomie weitere Daten umfassen, beispielsweise Annotationsinformationen wie etwa Kennzeichnungen anatomischer Teilstrukturen oder anatomische Landmarken. Dies kann insbesondere eine spätere Abbildung der charakteristischen Strukturpunkte SP auf die Musterdarstellung erleichtern.

In einem nächsten Schritt S4 wird eine Menge von charakteristischen Musterpunkten MP durch Abbilden der Menge von Strukturpunkten SP auf die Musterdarstellung bestimmt. Dabei kann insbesondere jeweils ein Gegenstück zu einem charakteristischen Strukturpunkt SP an einer gleichen relativen Position innerhalb der anatomischen Struktur in der Musterdarstellung bestimmt werden. Repräsentiert die Menge von charakteristischen Strukturpunkten SP eine oder mehrere Mittellinie(n) der anatomischen Struktur AS und umfasst das Bereitstellen S3 der zweidimensionalen Musterdarstellung, eine oder mehrere Mustermittellinie(n) bereitzustellen, so basiert das Bestimmen S4 der Menge von Musterpunkten MP insbesondere auf einem Abbilden der Menge von charakteristischen Strukturpunkten SP auf die Mustermittellinie(n).

Gemäß einem Aspekt des vorgeschlagenen Verfahrens kann dabei, wie in Fig. 3 angedeutet, das Bestimmen S4 der Menge von Musterpunkten MP ein Ausrichten S41 der Musterdarstellung und der anatomischen Struktur AS im ersten dreidimensionalen Bilddatensatz BDS1 zueinander umfassen, beispielweise anhand eines Ausrichtens bestimmter Landmarken oder anhand einer Mittelachsenorientierung. Außerdem kann ein Anpassen S42 der Musterdarstellung an die anatomische Struktur AS umfasst sein, beispielsweise eine Längen- und/oder Breitenanpassung der Musterdarstellung oder Teileinheiten der Musterdarstellung an die anatomische Struktur AS oder deren Teilstrukturen.

In einem weiteren Schritt S5 wird eine Deformationsfläche in einer Ebene mit der Menge von Musterpunkten MP bestimmt, wobei jeder Musterpunkt der Menge von Musterpunkten MP durch einen Flächenpunkt in der Deformationsfläche repräsentiert ist. Die Deformationsfläche kann insbesondere eine glatte Geometrie aufweisen und in vorteilhaften Ausbildungen ein (Oberflächen-)Gitter, insbesondere ein regelmäßiges Gitter, umfassen. Ist die Deformationsfläche als Gitter vorgesehen, so kann ein Flächenpunkt jeweils dem einem Musterpunkt nächstliegende Gitterknoten des Gitters entsprechen. Jeder der Flächenpunkte kann also jeweils einem Gitterknotenpunkt des Oberflächengitters entsprichen, welcher in der initialen, undeformierten Deformationsfläche dem Musterpunkt MP aus der Menge von Musterpunkten MP am nächsten liegt, welcher von dem entsprechenden Flächenpunkt repräsentiert wird. Es kann auch andere Ausbildungen geben.

In einem weiteren Schritt S6 wird dann eine erste, deformierte Deformationsfläche DF1 durch Anwenden eines Deformationsalgorithmus auf die initiale, undeformierte Deformationsfläche, die Menge von Strukturpunkten SP und die Menge von Flächenpunkten berechnet, wobei jeder Flächenpunkt aus der Menge von Flächenpunkten zu dem entsprechenden Strukturpunkt SP aus der Menge von Strukturpunkten SP bewegt wird. Der Deformationsalgorithmus kann beispielsweise auf einem sogenannten "As-Rigid-As-Possible"-Algorithmus (dt.: "So-starr-wie-möglich"-Algorithmus) basieren, wobei die Strukturpunkte SP bzw. Flächenpunkte als sogenannte Einschränkungspunkte ("constraint points") für die Deformation der initialen, undeformierten Deformationsfläche dienen.

In den weiteren Schritten S7 und S8 wird anschließend basierend auf der ersten deformierten Deformationsfläche und dem ersten 3D-Bilddatensatz BDS1 oder einem bereitgestellten zweiten 3D-Bilddatensatz der entfaltete 2D-Bilddatensatz EBDS1 erzeugt. Im Schritt S7 wird eine Menge von Voxelpositionen in Bezug auf den ersten dreidimensionalen Bilddatensatz BDS1 oder in Bezug auf den bereitgestellten, zweiten dreidimensionalen Bilddatensatz und basierend auf der ersten deformierten Deformationsfläche DF1 bestimmt. Das zweidimensionale entfaltete Bild EBDS1, insbesondere die Bildwerte der Pixel des entfalteten 2D-Bilddatensatzes EBDS1, kann bzw. können dann durch Extrahieren von Voxelwerten aus den Voxelpositionen im ersten oder zweiten 3D-Bilddatensatz abgetastet, d.h. berechnet, werden (Schritt S8). Dadurch kann außerdem eine bidirektionale Zuordnung zwischen 3D-Positionen im ersten oder zweiten 3D-Bilddatensatz und 2D-Positionen im entfalteten 2D-Bilddatensatz hergestellt werden. Das Bestimmen der Voxelpositionen bzw. der daraus extrahierten Bildwerte kann eine Interpolation umfassen, da eine deformierte Deformationsfläche nicht notwendigerweise durch die Voxelzentren eines 3D-Bilddatensatzes verläuft, die üblicherweise in einem festen Raster angeordnet sind.

Der bereitgestellte zweite 3D-Bilddatensatz kann dabei insbesondere den gleichen Abbildungsbereich darstellen wie der erste 3D-Bilddatensatz BDS1. Der zweite 3D-Bilddatensatz kann sich jedoch vom ersten 3D-Bilddatensatz BDS1 beispielsweise hinsichtlich einer rekonstruierten Bildauflösung oder einem Informationsgehalt, beispielsweise betreffend spektrale Bildinformationen, unterscheiden. Der zweite 3D- Bilddatensatz kann insbesondere auf Messdaten aus dem gleichen Aufnahmevorgang wie der erste 3D-Bilddatensatz basieren. Unterscheidet sich der zweite 3D-Bilddatensatz vom ersten 3D-Bilddatensatz BDS1 hinsichtlich einer Bildauflösung, kann für eine Berechnen der Voxelpositionen und des entfalteten Bilddatensatzes EBDS1 vorgesehen sein, dass eine Kantenlängen der Polygone eines die Deformationsfläche repräsentierenden planaren Oberflächengitters und/oder eine Anzahl der pro Polygon abgetasteten Punkte anpasst wird um die die Auflösung des resultierenden entfalteten 2D-Bilddatensatzes EBDS1 an die Auflösung des zweiten 3D-Bilddatensatzes anzupassen.

In einem weiteren Schritt S9 wird dann der zweidimensionale, entfaltete Bilddatensatz EBDS1 bereitgestellt.

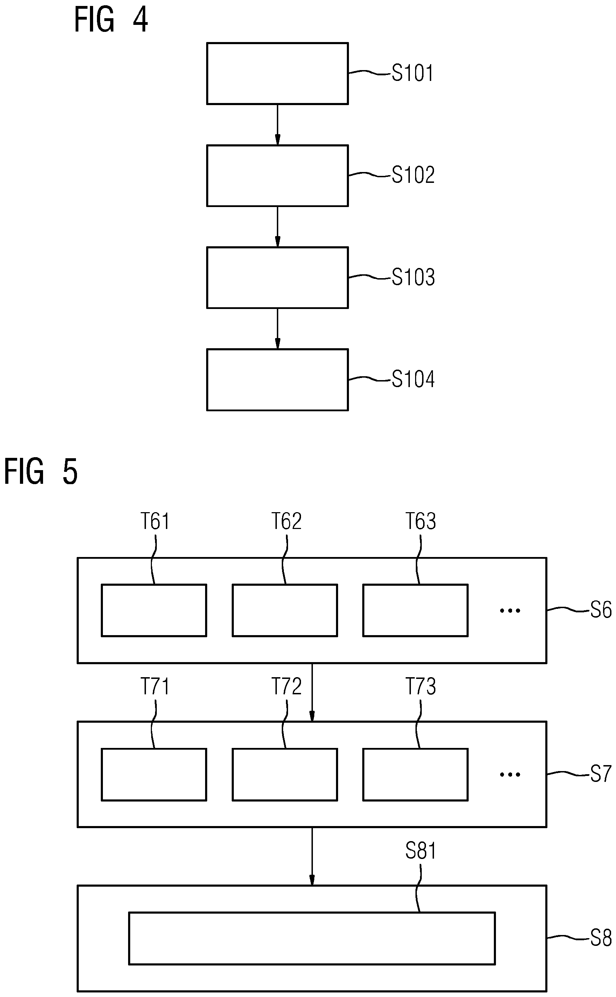

Fig. 4 zeigt schematisch weiterhin eine Verfahrensvariante wobei, wobei das Bereitstellen des ersten 3D-Bilddatensatzes EBDS1 auf einem zuvor bestimmten Teilbilddatensatz TB aus einem dritten 3D-Bilddatensatz basiert.

Dies kann das Bereitstellen S101 eines dritten dreidimensionalen Bilddatensatzes BDS3 umfassend die anatomische Struktur AS, das Lokalisieren S102 der anatomischen Struktur in dem dritten dreidimensionalen Bilddatensatz BDS3, das Bestimmen S103 eines Teilbilddatensatzes TBS basierend auf dem dritten dreidimensionalen Bilddatensatzes BDS3 und der lokalisierten anatomischen Struktur, und das Bereitstellen S104 des Teilbilddatensatzes TBS als ersten dreidimensionalen Bilddatensatz BDS1 umfassen.

Insbesondere kann der dritte 3D-Bilddatensatz BDS3 einen größeren Bildausschnitt abbilden als der erste oder zweite 3D-Bilddatensatz. Insbesondere kann der erste 3D-Bilddatensatz BDS1 ein Subvolumen des dritten 3D-Bilddatensatzes sein und auf Messdaten aus dem gleichen Aufnahmevorgang wie der dritte 3D-Bilddatensatz BDS3 basieren.

Beispielsweise kann auch ein Lokalisieren S103 der anatomischen Struktur AS im dritten 3D-Bilddatensatz BDS3 auf dem Anwenden einer trainierten Funktion basieren. Beispielsweise kann um die lokalisierte anatomische Struktur AS ein Subvolumen, d.h. ein Teilbilddatensatz TBS, definiert werden, welches die anatomische Struktur umfasst, wobei Letzterer dann dem vorgeschlagenen Verfahren als erster 3D-Bilddatensatz BDS1 bereitgestellt wird.

Fig. 5 zeigt eine weitere Verfahrensvariante, wobei die anatomische Struktur AS in eine Mehrzahl an Untereinheiten unterteilt wird und zumindest die Schritte des Berechnens S6 der ersten deformierten Deformationsfläche DF1 und des Berechnens S7 der Menge von Voxelpositionen für jede Untereinheit separat durchgeführt wird, und wobei das Berechnen des zweidimensionalen, entfalteten Bilddatensatz S8 auf den Voxelpositionen der Mehrzahl an Untereinheiten basiert. Das heißt, für jede Untereinheit wird zumindest ein Schritt des Berechnens T61, T62, T63,... der ersten deformierten Deformationsfläche DF1 und ein Schritt des Berechnens T72, T72, T73... der Menge von Voxelpositionen separat durchgeführt, wobei für die Berechnung S8 des entfalteten 2D-Bilddatensatz die Teilentfaltungen zu einem gemeinsamen entfalteten Bilddatensatz kombiniert werden S81.

Insbesondere, wenn die anatomische Struktur AS eine Hand umfasst, so kann hierbei bei der Unterteilung in eine Mehrzahl an Untereinheiten eine jeweilige Untereinheit einen Finger, insbesondere alle zu einem Finger gehörigen Fingerknochen, umfassen.

Dabei können für die Teilentfaltungen auch unterstützende Strukturpunkte als Einschränkungspunkte für die Deformation herangezogen werden, welche benachbarten Untereinheiten zuzuordnen sind, um nicht übereinstimmende Entfaltungen in überlappenden Bildbereichen zu vermeiden.

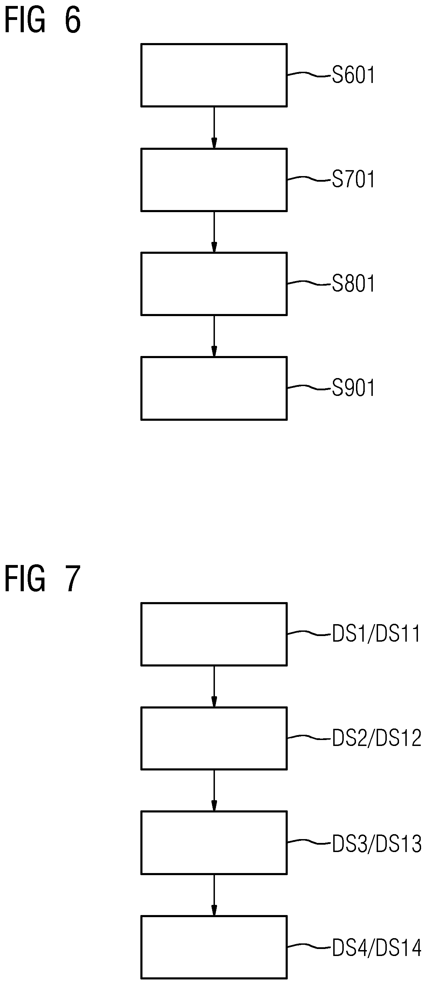

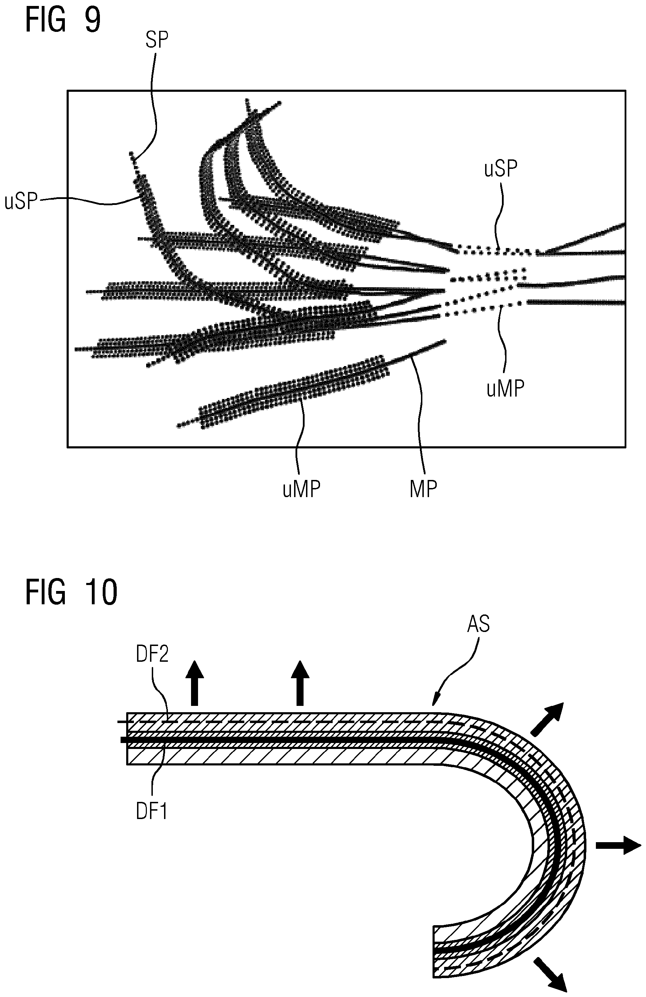

Fig. 6 zeigt weiterhin einen schematischen Ablauf eines Aspekts des vorgeschlagenen Verfahrens, wobei eine zweite Deformationsfläche und ein zweiter entfalteter 2D-Bilddatensatz bestimmt wird. Dazu kann im Schritt S601 zumindest eine zweite deformierte Deformationsfläche DF2 bestimmt werden, indem die erste deformierte Deformationsfläche DF1 entlang ihrer ortsabhängigen Normalenvektoren verformt wird. Basierend auf der zweiten Deformationsfläche DF2 und dem ersten oder zweiten 3D-Bilddatensatz BDS1 kann ein zweiter entfalteter 2D-Bilddatensatzes bestimmt werden. Dies ist auch in Fig. 10 in einer vereinfachten Darstellung und in einer Schnittansicht senkrecht zur Deformationsfläche veranschaulicht. Beispielsweise resultiert aus dem vorgeschlagenen Verfahren eine erste deformierte Deformationsfläche DF1, welche auf einer Mittellinienextraktion der anatomischen Struktur AS als charakteristische Strukturpunkte SP basiert, welche durch eine mittige Schicht der anatomischen Struktur AS verläuft. Durch die Bestimmung einer zweiten oder dritten deformierten Deformationsfläche DF2 basierend auf einer ortsabhängigen Verformung der ersten deformierten Deformationsfläche DF1 entlang ihrer ortsabhängigen Normalenvektoren können auch Schichten der anatomischen Struktur anterior oder posterior visualisieren werden.

Basierend auf der zweiten Deformationsfläche DF2 kann analog zu obiger Beschreibung in den Schritten Berechnen S701 einer Menge von Voxelpositionen in Bezug auf den ersten dreidimensionalen Bilddatensatz BDS1 oder in Bezug auf einen bereitgestellten, zweiten dreidimensionalen Bilddatensatz und basierend auf der zweiten deformierten Deformationsfläche DF2, Berechnen S801 eines zweiten entfalteten 2D-Bilddatensatzes der anatomischen Struktur AS basierend auf dem ersten dreidimensionalen Bilddatensatz BDS1 oder dem zweiten dreidimensionalen Bilddatensatz und der Menge von Voxelpositionen, ein zweiter entfalteter 2D-Bilddatensatz erzeugt und im Schritt S901 bereitgestellt werden.

Insbesondere kann bei einer derartigen Berechnung einer Mehrzahl an deformierten Deformationsflächen ein sogenannter 3d-Stapel der anatomischen Struktur AS in einer entfalteten Darstellung bereitgestellt werden.

Fig. 7 zeigt ein schematisches Ablaufdiagramm eines Verfahrens gemäß einem weiteren Aspekt.

Hierbei umfasst das Verfahren weiterhin, dass in einem Schritt DS1 der erste oder zweite (und ggf. auch jeder weitere) entfaltete 2D-Bilddatensatz EBDS1 in einer Benutzerschnittstelle 41 angezeigt wird.

Weiterhin umfasst das Verfahren den Schritt DS2, dass eine 2D-Position in dem erstem oder zweiten entfalteten 2D-Bilddatensatz EBDS1 basierend auf einer manuellen Benutzereingabe bestimmt wird.

Weiterhin wird in einem Schritt DS3 eine 3D-Position in dem ersten, zweiten oder dritten 3D-Bilddatensatz BDS1 basierend auf der 2D-Position und einem Ergebnis des Deformationsalgorithmus/der deformierten Deformationsfläche bestimmt wird, und in einem Schritt DS4 ein Bildausschnitt des ersten, zweiten oder dritten 3D-Bilddatensatzes BDS1 und/oder eine Querschnittsdarstellung davon umfassend die bestimmte 3D-Position und/oder eine Markierung repräsentierend die 3D-Position im ersten, zweiten oder dritten 3D-Bilddatensatz BDS1 und/oder in der Querschnittsdarstellung auf der Benutzerschnittstelle 41 angezeigt wird DS4.

Da vorteilhaft eine bidirektionale Zuordnung zwischen 3D-Positionen im ersten oder zweiten 3D-Bilddatensatz und 2D-Positionen im entfalteten 2D-Bilddatensatz existiert, kann die entsprechende Position im Original-3D-Bilddatensatz bestimmt werden, wenn eine 2D-Position im entfalteten Bild ausgewählt wird ("2D-3D-Navigation").

Gleiches gilt auch für den umgekehrten Weg ("3D-2D-Navigation"). Das heißt, alternativ oder ebenso kann das Verfahren auch umfassen, dass in einem Schritt DS11 der erste, zweite oder dritte 3D-Bilddatensatz BDS1 und/oder zumindest eine Querschnittsdarstellungen davon mittels einer Benutzerschnittstelle 41 angezeigt wird, in einem Schritt DS12 eine 3D Position in dem ersten, zweiten oder dritten 3D-Bilddatensatz BDS1 und/oder der Querschnittsdarstellung basierend auf einer manuellen Benutzerangabe bestimmt wird, in einem weiteren Schritt DS13 eine 2D-Position in dem ersten oder zweiten entfalteten 2D-Bilddatensatz basierend auf der 3D-Position und einem Ergebnis des Deformationsalgorithmus/der deformierten Deformationsfläche bestimmt wird, und anschließend in einem Schritt DS14 ein Bildausschnitt des ersten oder zweiten entfalteten 2D-Bilddatensatzes EBDS1 umfassend die bestimmte 2D-Position und/oder eine Markierung repräsentierend die 2D-Position im ersten oder zweiten entfalteten 2D-Bilddatensatz EBDS1 auf der Benutzerschnittstelle 41 angezeigt wird.

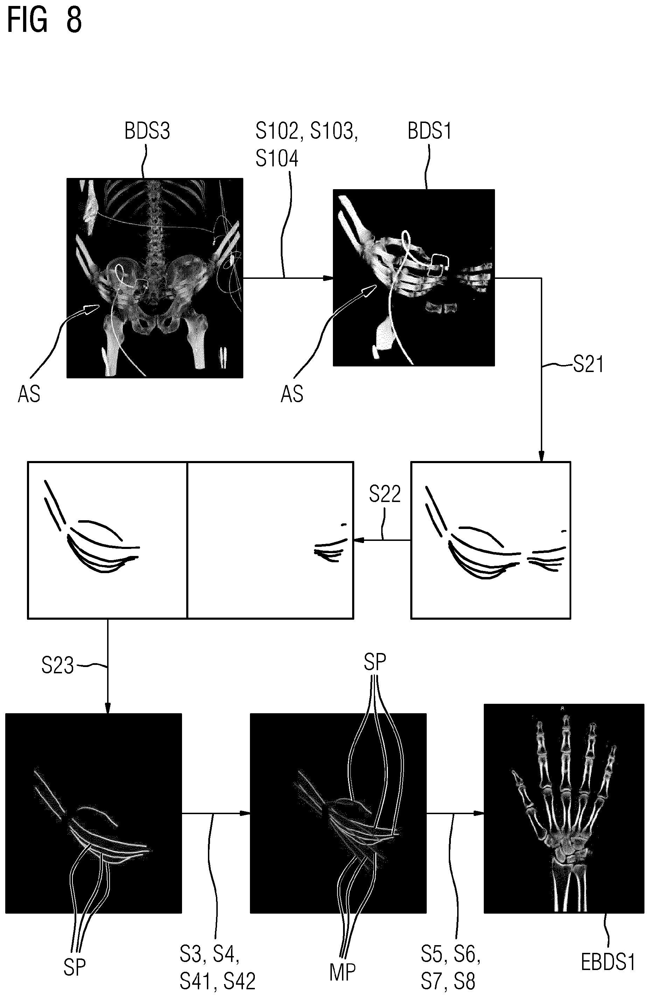

Fig. 8 veranschaulicht einen Verfahrensablauf gemäß einer Verfahrensvariante. Dabei betrifft die anatomische Struktur AS die Hand eines Patienten. Insbesondere wird hier ein dritter 3D-Bilddatensatz BDS3 bereitgestellt, basierend auf welchem die anatomische Struktur AS lokalisiert (S102) und ein Teilbilddatensatz (S103) bestimmt wird, welcher insbesondere die lokalisierte anatomische Struktur umfasst. Dieser Teilbilddatensatz wird als erster 3D-Bilddatensatz BDS1 für die weiteren Schritte bereitgestellt (S104).

Basierend auf dem ersten 3D-Bilddatensatz BDS1 erfolgt eine Segmentierung S21 der anatomischen Struktur AS, so dass ein Bildvolumen umfassend die segmentierte Struktur bereitgestellt ist. In dem gezeigten Fall ist neben der interessierenden anatomischen Struktur außerdem eine zweite gleichartige anatomische Struktur zumindest teilweise vom Bildvolumen umfasst, so dass ein Separieren S22 der anatomischen Strukturen durchgeführt wird.

Basierend auf der separierten und segmentierten anatomischen Struktur wird eine Menge an charakteristischen Strukturpunkten SP bestimmt, welche eine Mittellinie der segmentierten Struktur repräsentieren (S23), hier die Mittellinien der Fingerknochen der Hand sowie eines Teils der Elle und Speiche des Arms.

Weiterhin wird in den nicht gezeigten Schritten S3 und S4 eine Musterdarstellung der anatomischen Struktur bereitgestellt und eine Menge von Musterpunkten durch Abbilden der charakteristischen Strukturpunkte auf die Musterdarstellung bestimmt. Dabei kann insbesondere ein Ausrichten S41 der Musterdarstellung und der anatomischen Struktur AS zueinander und/oder ein Anpassen S42 der Musterdarstellung an die anatomische Struktur AS umfasst sein. Die nächste Abbildung im Verfahrensablauf zeigt insbesondere die ausgerichteten, charakteristischen Strukturpunkte SP und die zugehörigen Musterpunkte MP, welche für eine folgende Entfaltung genutzt werden. Insbesondere wird im Schritt S5 eine Deformationsfläche in einer Ebene mit der Menge von Musterpunkten MP bestimmt, wobei jeder Musterpunkt der Menge von Musterpunkten MP durch einen Flächenpunkt in der Deformationsfläche repräsentiert ist, im Schritt S6 eine erste, deformierte Deformationsfläche DF1 durch Anwenden eines Deformationsalgorithmus auf die Deformationsfläche, die Menge von Strukturpunkten SP und die Menge von Flächenpunkten berechnet, im Schritt S7 eine Menge von Voxelpositionen in Bezug auf den ersten dreidimensionalen Bilddatensatz BDS1 und basierend auf der ersten deformierten Deformationsfläche DF1 berechnet und in einem Schritt S8 der erste zweidimensionalen, entfalteten Bilddatensatzes EBDS1 der anatomischen Struktur AS basierend auf dem ersten dreidimensionalen Bilddatensatz BDS1 und der Menge von Voxelpositionen berechnet, so dass dieser letztendlich bereitgestellt werden kann.

Fig. 9 veranschaulicht weiterhin einen Aspekt des vorgeschlagenen Verfahrens, wobei außerdem zusätzliche, unterstützende Strukturpunkte uSP bestimmt werden, welche in einer Ebene mit, und insbesondere auch entlang, der Mittellinie der anatomischen Struktur AS angeordnet sind und/oder welche einen Übergang zwischen Teilstrukturen der anatomischen Struktur AS interpolieren.

Die Figur veranschaulicht extrahierte charakteristisch Strukturpunkte SP, welche auf den Mittellinien der Finger einer Hand angeordnet sind und außerdem auch auf einem Teil der Elle und Speiche. Außerdem sind zu jeder Mittellinie unterstützende Strukturpunkte uSP bestimmt, welche sich an den extrahierten Mittellinien orientieren und in einer Ebene mit diesen vorliegen. Weiterhin sind auch in einem Übergangsbereich zwischen den Fingerknochen und der Elle und Speiche im Bereich der Handwurzelknochen, in welchem keine Mittellinien vorliegen, unterstützende Strukturpunkte uSP vorgesehen.

Entsprechend sind auch unterstützende Musterpunkte uMP in der an der anatomischen Struktur AS ausgerichteten Musterdarstellung in Form von Mustermittellinien als Gegenstück zu den unterstützenden Strukturpunkten uSP und zugehörige Flächenpunkte in der Deformationsfläche als weitere Eingabepunkte für den Deformationsalgorithmus bestimmt. Die unterstützenden Musterpunkte uMP orientieren sich ebenfalls an den Mittellinien der Musterdarstellung und sind in einer Eben mit der Musterdarstellung und im Übergangsbereich zwischen den Fingerknochen und den Armknochen angeordnet.

Die unterstützenden Strukturpunkte uSP und entsprechende unterstützende Musterpunkte bzw. Flächenpunkte als weitere Eingabepunkte für den Deformationsalgorithmus können eine Kontrolle ermöglichen, wie die verformte Deformationsfläche DF1 durch die anatomische Struktur AS bzw. deren Teilstrukturen verläuft. Derart kann beispielsweise sichergestellt werden, dass die verformte Deformationsfläche DF1 wie eine koronale Ebene in der standardanatomischen Position durch die anatomische Struktur AS, beispielsweise einen jeweiligen Knochen, verläuft. Außerdem können zusätzliche unterstützende Strukturpunkte in Übergängen zwischen Teilstrukturen vorteilhaft unterstützen zu standardisieren, wie die verformte Deformationsfläche durch die Übergangsbereiche verläuft.

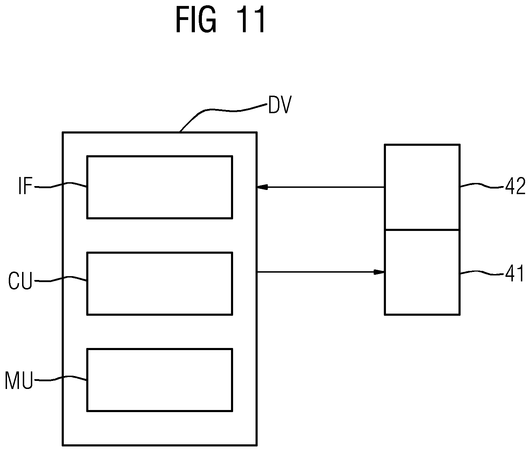

Fig. 11 zeigt eine schematische Darstellung einer Bereitstellungseinheit DV, welche zur Ausführung eines vorgeschlagenen Verfahrens und seiner Aspekte ausgebildet ist. Die Bereitstellungseinheit DV kann eine Schnittstelle IF, eine Recheneinheit CU und eine Speichereinheit MU umfassen.

Die Komponenten der Bereitstellungseinheit DV können miteinander verbunden sein, um einen effizienten Datenaustausch zu ermöglichen. Die Schnittstelle IF kann direkt mit der Recheneinheit CU verbunden sein, welche wiederum mit der Speichereinheit MU verbunden sein kann. Diese Anordnung kann einen Informationsfluss von der Schnittstelle IF über die Recheneinheit CU zur Speichereinheit MU ermöglichen.

Die Bereitstellungseinheit DV kann für die Datenverarbeitung und -speicherung ausgelegt sein. Die Schnittstelle IF kann dabei als Schnittstelle für Ein-/Ausgabeoperationen dienen, die Recheneinheit CU kann Berechnungsaufgaben durchführen und die Speichereinheit MU kann Daten oder Ergebnisse speichern.

Die Schnittstelle kann insbesondere dazu ausgebildet sein, einen erste, zweiten oder dritten 3D-Bilddatensatz und/oder eine Musterdarstellung bereitzustellen. Die Schnittstelle kann dazu ausgebildet sein einen ersten oder zweiten entfalteten 2D-Bilddatensatz bereitzustellen. Die Recheneinheit CU kann ausgebildet sein die Schritte des Bestimmens und Berechnens des vorgeschlagenen Verfahrens und entsprechende Schritte seiner Ausführungsvarianten auszuführen.

Die Speichereinheit MU kann dazu ausgebildet sein, einen ersten, zweiten oder dritten 3D-Bilddatensatz und/oder eine Musterdarstellung und/oder einen ersten oder zweiten entfalteten 2D-Bilddatensatz zu speichern. Die Speichereinheit MU kann verschiedene Speichertechnologien verwenden, um eine effiziente Verwaltung und schnellen Zugriff auf die gespeicherten Daten zu ermöglichen.

Die Bereitstellungseinheit DV kann mit einer Eingabeeinheit 42, beispielsweise eine Tastatur, und eine Darstellungseinheit 41, beispielsweise einen Monitor und/oder Display, aufweisen. Die Eingabeeinheit 42 kann in die Darstellungseinheit 41 integriert sein, beispielsweise bei einem kapazitiven und/oder resistiven Eingabedisplay. Dabei kann durch eine Eingabe eines medizinischen Bedienpersonals an der Eingabeeinheit 42 eine Steuerung der Bereitstellungseinheit DV ermöglicht werden. Hierfür kann die Eingabeeinheit 42 beispielsweise ein Signal an die Bereitstellungseinheit DV senden. Die Darstellungseinheit 41 kann vorteilhafterweise zur Anzeige von 2D- und 3D-Bilddatensätzen und daraus abgeleiteter Informationen und Darstellungen, beispielsweise Querschnittsdarstellungen, ausgebildet sein. Hierfür kann die Bereitstellungseinheit DV ein Signal an die Darstellungseinheit 41 senden. Weiterhin kann mittels der Eingabeeinheit 42 und ggf. der Darstellungseinheit 41 eine manuelle Eingabe eines medizinischen Bedienpersonals ermöglicht werden, beispielswiese zur Bestimmung einer 2D- oder 3D-Position in einem 2D- oder 3D-Bilddatensatz gemäß einem Aspekt des vorgeschlagenen Verfahrens, welche mittels der Bereitstellungseinheit DV weiterverarbeitet werden kann.

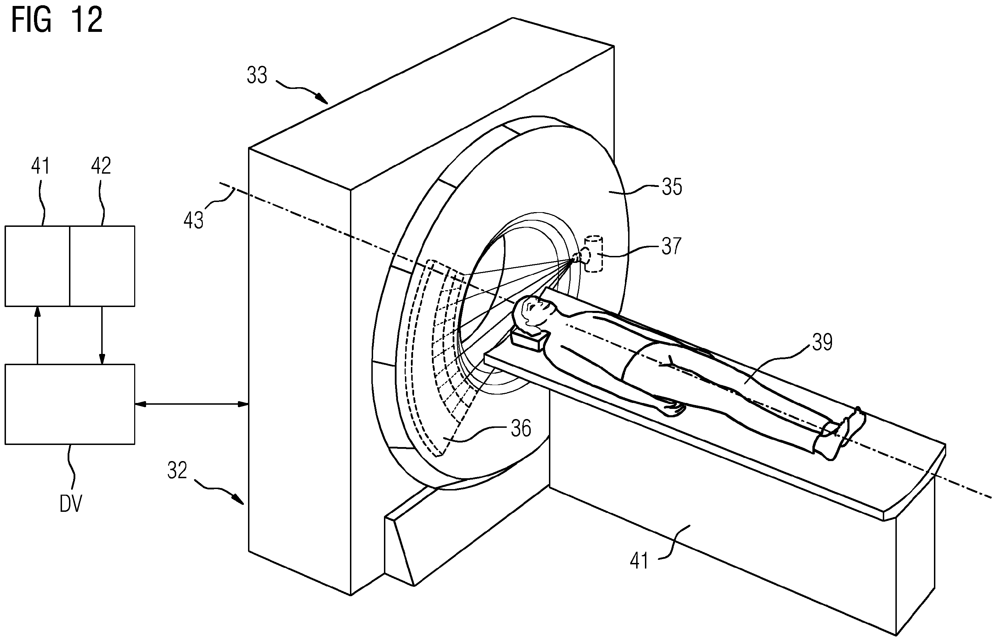

Fig. 12 zeigt eine schematische Darstellung eines Systems umfassend ein medizinisches Bildgebungsgerät 32 und eine Bereitstellungseinheit DV.

Das medizinische Bildgebungsgerät 32 ist in diesem Beispiel insbesondere ein CT-Gerät umfassend eine die Strahlenquelle, hier insbesondere Röntgenquelle 37, einen Strahlendetektor, hier insbesondere Röntgendetektor 36, und eine Bereitstellungseinheit DV. Dabei können die Röntgenquelle 37 und der Röntgendetektor 36 in Gegenüberstellung zueinander angeordnet sein. Die Röntgenquelle 37 kann dazu ausgebildet sein, den Röntgendetektor 36 entlang einer Röntgenstrahleneinfallsrichtung mit Röntgenstrahlung zu beleuchten. Der Röntgendetektor 1 kann ein indirekt-konvertierender Röntgendetektor, beispielsweise ein Szintillationsdetektor oder auch direkt-konvertierender Röntgendetektor sein. Insbesondere kann ein direkt-konvertierender Röntgendetektor als photonenzählender Röntgendetektor ausgebildet sein, beispielsweise aufweisend CdTe, CdZnTe, CdTeSe, CdZnTeSe oder CdMnTe oder auch ein anderes Halbleitermaterial als Detektionsmaterial aufweisen. Vorteilhaft kann eine mit einem photonenzählenden Röntgendetektor erreichbare sehr hohe Bildauflösung und/oder der Zugang zu spektralen Informationen auch im Rahmen des vorgeschlagenen Verfahrens genutzt werden.

Das CT-Gerät 32 kann zudem eine Gantry 33 mit einem Rotor 35 umfassen. Die Röntgenquelle 37 und der Röntgendetektor 36 können in definierter Anordnung an dem Rotor 35 angeordnet sein, insbesondere in den Rotor 35 integriert oder an dem Rotor 35 befestigt sein. Der Rotor 35 kann um eine Rotationsachse 43 drehbar gelagert sein. Das abzubildendes Untersuchungsobjekt 39, hier ein menschlicher Patient, kann auf der Patientenlagerungsvorrichtung 41 gelagert und entlang der Rotationsachse 43 durch die Gantry 32 hindurch bewegbar sein. Zur Steuerung des CT-Geräts 32 und zur Berechnung von Schnittbildern bzw. Volumenbildern des Untersuchungsobjekts 39 kann die Verarbeitungseinheit DV verwendet werden. Eine Eingabeeinrichtung 42, beispielsweise eine Tastatur und/oder Maus, und eine Ausgabevorrichtung 41, beispielsweise ein Bildschirm und/oder Display, können mit der Verarbeitungseinheit DV verbunden, insbesondere signaltechnisch gekoppelt, sein. Die Eingabeeinrichtung 42 kann in die Ausgabevorrichtung 41 integriert sein, beispielsweise bei einem, insbesondere resistiven und/oder kapazitiven, Eingabedisplay. Die Ausgabevorrichtung 41 kann zur Anzeige einer graphischen Darstellung der Bilddatensätze und oder daraus abgeleiteter Informationen und Darstellungen ausgebildet sein. Die Eingabeeinheit 42 kann durch eine Eingabe eines medizinischen Bedienpersonals an der Eingabeeinheit 42 eine Steuerung der Bereitstellungseinheit DV und/oder des medizinischen Bildgebungsgeräts 32 ermöglichen.

Die in den beschriebenen Figuren enthaltenen schematischen Darstellungen bilden keinerlei Maßstab oder Größenverhältnisse ab.

Es wird abschließend noch einmal darauf hingewiesen, dass es sich bei den vorhergehend detailliert beschriebenen Verfahren sowie bei den dargestellten Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Element" nicht aus, dass die betreffenden Komponenten aus mehreren zusammenwirkenden Teil-Komponenten bestehen, die gegebenenfalls auch räumlich verteilt sein können.

Der Ausdruck "basierend auf" kann im Kontext der vorliegenden Anmeldung insbesondere im Sinne des Ausdrucks "unter Verwendung von" verstanden werden. Insbesondere schließt eine Formulierung, der zufolge ein erstes Merkmal basierend auf einem zweiten Merkmal erzeugt (alternativ: ermittelt, bestimmt etc.) wird, nicht aus, dass das erste Merkmal basierend auf einem dritten Merkmal erzeugt (alternativ: ermittelt, bestimmt etc.) werden kann.

## Patentansprüche

1. Computerimplementiertes Verfahren zum Bereitstellen zumindest eines ersten zweidimensionalen, entfalteten Bilddatensatzes (EBDS1) einer anatomischen Struktur (AS), insbesondere zumindest eines Teilbereichs der Hand, umfassen die Schritte
- Bereitstellen (S1) eines ersten dreidimensionalen Bilddatensatzes (BDS1), der die anatomische Struktur umfasst,
- Bestimmen (S2) einer Menge von charakteristischen Strukturpunkten (SP) der anatomischen Struktur basierend auf dem ersten dreidimensionalen Bilddatensatz (BDS1),
- Bereitstellen (S3) einer zweidimensionalen Musterdarstellung der anatomischen Struktur,
- Bestimmen (S4) einer Menge von charakteristischen Musterpunkten (MP) durch Abbilden der Menge von Strukturpunkten (SP) auf die Musterdarstellung,
- Bestimmen (S5) einer Deformationsfläche in einer Ebene mit der Menge von Musterpunkten (MP), wobei jeder Musterpunkt der Menge von Musterpunkten (MP) durch einen Flächenpunkt in der Deformationsfläche repräsentiert ist,
- Berechnen (S6) einer ersten, deformierten Deformationsfläche (DF1) durch Anwenden eines Deformationsalgorithmus auf die Deformationsfläche, die Menge von Strukturpunkten (SP) und die Menge von Flächenpunkten, wobei jeder Flächenpunkt aus der Menge von Flächenpunkten zu dem entsprechenden Strukturpunkt (SP) aus der Menge von Strukturpunkten (SP) bewegt wird,
- Berechnen (S7) einer Menge von Voxelpositionen in Bezug auf den ersten dreidimensionalen Bilddatensatz (BDS1) oder in Bezug auf einen bereitgestellten, zweiten dreidimensionalen Bilddatensatz und basierend auf der ersten deformierten Deformationsfläche (DF1),
- Berechnen (S8) des ersten zweidimensionalen, entfalteten Bilddatensatzes (EBDS1) der anatomischen Struktur (AS) basierend auf dem ersten dreidimensionalen Bilddatensatz (BDS1) oder dem zweiten dreidimensionalen Bilddatensatz und der Menge von Voxelpositionen, und
- Bereitstellen (S9) des zweidimensionalen, entfalteten Bilddatensatzes (EBDS1).

2. Verfahren nach Anspruch 1, wobei das Bestimmen (S2) einer Menge von charakteristischen Strukturpunkten (SP) das Segmentieren (S21) der anatomischen Struktur (AS) umfasst und wobei die Menge von charakteristischen Strukturpunkten (SP) basierend auf der segmentierten Struktur bestimmt wird.

3. Verfahren nach einem der vorangehenden Ansprüche, wobei
- die Menge von charakteristischen Strukturpunkten (SP) eine Mittellinie der anatomischen Struktur (AS) repräsentiert,
- das Bereitstellen (S3) der zweidimensionalen Musterdarstellung umfasst, eine Mustermittellinie bereitzustellen, und
- das Bestimmen (S4) der Menge von Musterpunkten (MP) auf einem Abbilden der Menge von charakteristischen Strukturpunkten (SP) auf die Mustermittellinie basiert.

4. Verfahren nach Anspruch 3, wobei außerdem zusätzliche, unterstützende Strukturpunkte (uSP) bestimmt werden, welche in einer Ebene mit der Mittellinie der anatomischen Struktur (AS) angeordnet sind und/oder welche einen Übergang zwischen Teilstrukturen der anatomischen Struktur (AS) interpolieren.

5. Verfahren nach einem der vorangehenden Ansprüche, wobei das Bestimmen (S4) der Menge von Musterpunkten (MP) ein Ausrichten (S41) der Musterdarstellung und der anatomischen Struktur (AS) zueinander und/oder ein Anpassen (S42) der Musterdarstellung an die anatomische Struktur (AS) umfasst.

6. Verfahren nach einem der vorangehenden Ansprüche, wobei die Deformationsfläche als Oberflächengitter ausgebildet ist und jeder der Flächenpunkte jeweils einem Gitterknotenpunkt des Oberflächengitters entspricht, welcher in der initialen Deformationsfläche dem Musterpunkt (MP) aus der Menge von Musterpunkten (MP) am nächsten liegt, welcher von dem entsprechenden Flächenpunkt repräsentiert wird.

7. Verfahren nach einem der vorangehenden Ansprüche, außerdem umfassend
- Bereitstellen (S101) eines dritten dreidimensionalen Bilddatensatzes (BDS3) umfassend die anatomische Struktur (AS),
- Lokalisieren (S102) der anatomischen Struktur in dem dritten dreidimensionalen Bilddatensatz (BDS3),
- Bestimmen (S103) eines Teilbilddatensatzes (TBS) basierend auf dem dritten dreidimensionalen Bilddatensatzes (BDS3) und der lokalisierten anatomischen Struktur, und
- Bereitstellen (S104) des Teilbilddatensatzes (TBS) als ersten dreidimensionalen Bilddatensatz (BDS1).

8. Verfahren nach einem der vorangehenden Ansprüche, wobei vom ersten dreidimensionalen Bilddatensatz (BDS1) zumindest teilweise eine weitere, gleichartige anatomische Struktur umfasst ist, und wobei das Verfahren umfasst,
- Separieren (S22) der anatomischen Struktur (AS) und der weiteren, gleichartigen anatomischen Struktur vor dem Bestimmen der Menge von charakteristischen Strukturpunkten (SP).

9. Verfahren nach einem der vorangehenden Ansprüche, wobei zumindest bei einem Schritt des Verfahrens ein Verfahren des maschinellen Lernens eingesetzt wird.

10. Verfahren nach einem der vorangehenden Ansprüche, wobei die anatomische Struktur in eine Mehrzahl an Untereinheiten unterteilt wird und zumindest die Schritte des Berechnens (S6) der ersten deformierten Deformationsfläche (DF1) und des Berechnens (S7) der Menge von Voxelpositionen für jede Untereinheit separat durchgeführt wird, und wobei das Berechnen des zweidimensionalen, entfalteten Bilddatensatz (S8) auf den Voxelpositionen der Mehrzahl an Untereinheiten basiert.

11. Verfahren nach einem der vorangehenden Ansprüche, wobei
- zumindest eine zweite deformierte Deformationsfläche (DF2) bestimmt wird (S601), indem die erste deformierte Deformationsfläche (DF1) entlang ihrer ortsabhängigen Normalenvektoren verformt wird, und
- basierend auf der zweiten Deformationsfläche (DF2) und dem ersten oder zweiten dreidimensionalen Bilddatensatz (BDS1) ein zweiter zweidimensionaler, entfalteter Bilddatensatzes bestimmt wird (S701,S801).

12. Verfahren nach einem der vorangehenden Ansprüche, wobei der bereitgestellte, zweite dreidimensionale Bilddatensatz den gleichen Abbildungsbereich abbildet wie der erste, dreidimensionale Bilddatensatz (BDS1), jedoch eine andere Bildauflösung aufweist als der erste, dreidimensionale Bilddatensatz (BDS1) und/oder spektrale Bildinformationen umfasst.

13. Verfahren nach einem der vorangehenden Ansprüche, wobei
- der erste oder zweite zweidimensionale, entfaltete Bilddatensatz (EBDS1) in einer Benutzerschnittstelle (41) angezeigt wird (DS1),
- eine 2D-Position in dem erstem oder zweiten zweidimensionalen, entfalteten Bilddatensatz (EBDS1) basierend auf einer manuellen Benutzereingabe bestimmt wird (DS2),
- eine 3D-Position in dem ersten, zweiten oder dritten dreidimensionalen Bilddatensatz (BDS1) basierend auf der 2D-Position und einem Ergebnis des Deformationsalgorithmus bestimmt wird (DS3), und
- ein Bildausschnitt des ersten, zweiten oder dritten dreidimensionalen Bilddatensatzes (BDS1) und/oder eine Querschnittsdarstellung davon umfassend die bestimmte 3D-Position und/oder eine Markierung repräsentierend die 3D-Position im ersten, zweiten oder dritten dreidimensionalen Bilddatensatz (BDS1) und/oder in der Querschnittsdarstellung auf der Benutzerschnittstelle (41) angezeigt wird (DS4),
oder wobei
- der erste, zweite oder dritte dreidimensionale Bilddatensatz (BDS1) und/oder zumindest eine Querschnittsdarstellungen davon mittels einer Benutzerschnittstelle (41) angezeigt wird (DS11),
- eine 3D Position in dem ersten, zweiten oder dritten dreidimensionalen Bilddatensatz (BDS1) und/oder der Querschnittsdarstellung basierend auf einer manuellen Benutzerangabe bestimmt wird (DS12),
- eine 2D-Position in dem ersten oder zweiten zweidimensionalen, entfalteten Bilddatensatz basierend auf der 3D-Position und einem Ergebnis des Deformationsalgorithmus bestimmt wird (DS13), und
- ein Bildausschnitt des ersten oder zweiten zweidimensionalen, entfalteten Bilddatensatzes (EBDS1) umfassend die bestimmte 2D-Position und/oder eine Markierung repräsentierend die 2D-Position im ersten oder zweiten zweidimensionalen, entfalteten Bilddatensatz (EBDS1) auf der Benutzerschnittstelle (41) angezeigt wird (DS14).

14. Bereitstellungseinheit (DV), welche zur Ausführung eines Verfahrens nach einem der vorangehenden Ansprüche ausgebildet ist.

15. System umfassend ein medizinisches Bildgebungsgerät (32), vorzugsweise Röntgenbildgebungsgerät, insbesondere CT-Gerät, mit einer Strahlenquelle (37) und einem Strahlendetektor (36), und eine Bereitstellungseinheit (DV) zum Bereitstellen eines zweidimensionalen, entfalteten Bilddatensatzes (EBDS1) nach Anspruch 14.

16. Computerprogrammprodukt mit einem Computerprogramm, welches in einen Speicher (MU) einer Bereitstellungseinheit (DV) zum Bereitstellen zumindest eines ersten zweidimensionalen, entfalteten Bilddatensatzes (EBDS1) nach Anspruch 14 ladbar ist, mit Programmabschnitten, um alle Schritte des Verfahrens nach einem der Ansprüche 1 bis 13 auszuführen, wenn die Programmabschnitte von der Bereitstellungseinheit (DV) ausgeführt werden.
